# EUROPÄISCHE PATENTANMELDUNG

(11) **EP 4 678 838 A1**
(43) Veröffentlichungstag der Anmeldung: **14.01.2026**
(21) Anmeldenummer: 25188575.2
(22) Anmeldetag: 09.07.2025
(51) Int. Cl.: E04B 1/26, F16B 5/00

(54) **WAND-, DECKEN-, FASSADEN- ODER DACHELEMENTVERBINDUNG**

(30) Priorität: 10.07.2024 DE 202024103850 U
(71) Anmelder: Adolf Würth GmbH & Co. KG, 74653 Künzelsau (DE)
(72) Erfinder: Cera, Udo, 74523 Schwäbisch Hall (DE); Buhl, Stefan, 87538 Obermaiselstein (DE)
(74) Vertreter: Dilg, Haeusler, Schindelmann Patentanwaltsgesellschaft mbH

(57) **Zusammenfassung**

Eine Anordnung für eine Wand-, Decken-, Fassaden- oder Dachelementverbindung zur Verbindung stab-, balken- oder plattenförmiger Holzbauteile (1, 2) hat einen Zapfen (3) mit mindestens einem Einführloch (30); und eine lösbare Verbindung (15), die lösbar durch das mindestens eine Einführloch (30) des Zapfens (3) hindurchführbar und in ein erstes Holzbauteil (1) einführbar ist. Der Zapfen (3) ist ausgebildet, mittels der lösbaren Verbindung (15) an einer Anschlussfläche (10) an dem ersten Holzbauteil (1) befestigt zu werden. Der Zapfen (3) ist mit einer sich von der Anschlussfläche (10) in Richtung einer gegenüberliegenden Stirnfläche (11) zum Anschluss an ein zweites Holzbauteil (2) erweiternden Außenkontur ausgebildet. Der Zapfen (3) ist zur Einführung in einen Einführungsbereich (5) einer am zweiten Holzbauteil (2) angeordneten Tasche oder Nut (4) ausgebildet, und der Zapfen (3) ist zur Halterung in einem Haltebereich (6) der Tasche oder Nut (4) mit einer an die Außenkontur des Zapfens (3) angepassten, sich nach innen erweiternden Innenkontur ausgebildet.

## Beschreibung

Die Erfindung betrifft eine Anordnung für eine Wand-, Decken-, Fassaden- oder Dachelementverbindung zur Verbindung stab-, balken- oder plattenförmiger Holzbauteile aufweisend einen Zapfen und eine lösbare Verbindung, und eine Wand-, Decken-, Fassaden- oder Dachelementverbindung.

Zur Verbindung von Wand-, Decken- oder Dachelementen werden im Holzbau vielfach spezielle Metallverbinder oder klassische Holzverbindungen mit zum Beispiel Finger- oder Schwalbenschwanzverzinkungen ohne metallische Verbindungselemente eingesetzt. Bei den üblichen Schwalbenschwanzverbindungen wird in der Regel an dem einen Bauteil ein Zapfen mit einer speziell geformten Außenkontur angefräst oder ausgeschnitten. An dem zweiten Bauteil wird eine dazugehörige Nut mit einer zu der Außenkontur des Zapfens korrespondierenden Innenkontur hergestellt. Die seitlichen Außenflächen des Zapfens und die dazu korrespondierenden inneren Seitenflächen der Nut sind in der Regel abgeschrägt, so dass der Zapfen und die Nut im Querschnitt die Form eines Schwalbenschwanzes aufweisen. Dadurch kann eine derartige Verbindung nicht nur Querkräfte, sondern auch Zugkräfte übertragen. Allerdings ist die Herstellung einer derartigen Verbindung mit einem entsprechenden hohen Fertigungsaufwand verbunden. Außerdem müsste bei der Verbindung großflächiger Bauelemente relativ viel Material zur Herstellung der Zapfen entfernt werden, damit der Zapfen übrigbleibt. Auch die Metallverbinder sind in der Regel aufwändig in der Herstellung und erfordern eine genaue Vormontage. Außerdem ist bei der Wandmontage das Einfahren mit solchen Metallverbindern relativ schwer, da der Spielraum sehr gering ist.

Es ist eine Aufgabe der vorliegenden Erfindung, eine Wand-, Decken-, Fassaden- oder Dachelementverbindung der eingangs genannten Art zu schaffen, die eine einfache und wenig aufwendige Verbindung auch großflächiger Bauelemente ermöglicht.

Diese Aufgabe wird durch die Gegenstände gemäß den unabhängigen Ansprüchen gelöst. Bevorzugte Ausgestaltungen ergeben sich aus den abhängigen Ansprüchen.

Gemäß einem Ausführungsbeispiel der vorliegenden Erfindung ist eine Anordnung für eine Wand-, Decken-, Fassaden- oder Dachelementverbindung zur Verbindung stab-, balken- oder plattenförmiger Holzbauteile, bereitgestellt, aufweisend einen Zapfen mit mindestens einem Einführloch (zum Beispiel mindestens ein Durchgangsloch), und eine lösbare Verbindung, die lösbar durch das mindestens eine Einführloch des Zapfens hindurchführbar und in ein erstes Holzbauteil einführbar ist, wobei der Zapfen ausgebildet ist, mittels der lösbaren Verbindung an einer Anschlussfläche an dem ersten Holzbauteil befestigt zu werden, wobei der Zapfen mit einer sich von der Anschlussfläche in Richtung einer gegenüberliegenden Stirnfläche zum Anschluss an ein zweites Holzbauteil erweiternden Außenkontur ausgebildet ist, wobei der Zapfen zur Einführung in einen Einführungsbereich einer am zweiten Holzbauteil angeordneten Tasche oder Nut ausgebildet ist, und wobei der Zapfen zur Halterung in einem Haltebereich der Tasche oder Nut mit einer an die Außenkontur des Zapfens angepassten, sich nach innen erweiternden Innenkontur ausgebildet ist. Besagte Tasche oder Nut kann eine einzuhängende Vertiefung bilden.

Gemäß einem anderen Ausführungsbeispiel der vorliegenden Erfindung ist eine Wand-, Decken-, Fassaden- oder Dachelementverbindung bereitgestellt, aufweisend eine Anordnung mit den oben beschriebenen Merkmalen, ein erstes Holzbauteil, an dem die Anschlussfläche des Zapfens mittels der lösbaren Verbindung befestigt oder befestigbar ist, ein zweites Holzbauteil, an das der Zapfen angeschlossen oder anschließbar ist, so dass das zweite Holzbauteil der Stirnfläche des Zapfens zugewandt ist, wobei das zweite Holzbauteil eine Tasche oder Nut mit einem Einführungsbereich zum Einführen des Zapfens und einem Haltebereich zum Haltern des Zapfens aufweist, wobei der Haltebereich mit einer an die Außenkontur des Zapfens angepassten, sich nach innen erweiternden Innenkontur ausgebildet ist.

Gemäß einem exemplarischen Ausführungsbeispiel der Erfindung ist eine Wand-, Decken-, Fassaden- oder Dachelementverbindung geschaffen, umfassend einen an einem ersten Holzbauteil angeordneten Zapfen mit einer sich in Richtung des zweiten Bauelements erweiternden Außenkontur und eine an einem zweiten Holzbauteil vorgesehene Tasche oder Nut, die einen Einführungsbereich zum Einführen des Zapfens und einen Haltebereich mit einer an die Außenkontur des Zapfens angepassten, sich nach innen erweiternden Innenkontur zur Halterung des Zapfens aufweist. Der als separates Bauteil ausgebildete Zapfen ist über eine zum Beispiel als Schraub- oder Stiftverbindung ausgeführte lösbare Verbindung an dem ersten Holzbauteil befestigt. Die zu dem Zapfen gehörende Tasche oder Nut am zweiten Holzbauteil kann zum Beispiel direkt in das zweite Holzbauteil eingefräst sein oder als Adapterteil am zweiten Holzbauteil angebracht sein. Über die lösbare Verbindung können die Zapfen zum Beispiel einfach und schnell an beliebigen Stellen montiert werden. Es sind keine aufwändigen Fertigungs- oder Montageschritte erforderlich. So können zum Beispiel auch an den Stirn- oder Seitenflächen großer Wandbauteile in einfacher Weise entsprechende Zapfen an den gewünschten Stellen befestigt werden. Dadurch kann die Montage großformatiger Bauelemente, wie zum Beispiel aus Holz gefertigte Wand-, Decken- oder Dachelemente, erheblich vereinfacht werden. Gegenüber bekannten Metallverbindern bietet die erfindungsgemäße Wand-, Decken-, Fassaden- oder Dachelementverbindung außerdem eine verbesserte Bewegungsfreiheit. Beim Ansetzen der Verbindung können die Bauteile noch einfacher ausgerichtet und justiert werden, wodurch die Montage erheblich erleichtert wird. Sowohl der Zapfen als auch die entsprechende Tasche oder Nut können einfach und wenig aufwendig gefertigt werden und ermöglichen eine zuverlässige Verbindung mit einer erheblichen Zeitersparnis bei der Montage.

Im Weiteren werden zusätzliche Ausführungsbeispiele der Anordnung und der Wand-, Decken-, Fassaden- oder Dachelementverbindung beschrieben.

Ausführungsbeispiele der Erfindung stellen eine Anordnung zur Verbindung von beispielsweise Wand-, Decken-, Fassaden- oder Dachelementen bereit. Die zu verbindenden Elemente können beispielsweise stab-, balken- oder plattenförmig ausgebildet sein. Auch können diese Anordnungen zur Verbindung komplett vorgefertigter mehrteiliger zusammengesetzter Holzbauteile in Form von kompletten Raumelementen oder vorgehängten Fassadenelementen verwendet werden. Die Anordnung kann einen ein- oder mehrteiligen Zapfen und eine lösbare Verbindung zum Anschließen des Zapfens aufweisen. Auch vorgehängte Fassadenelemente oder Distanzhölzer von kubusförmigen Fertigelementen können gemäß exemplarischen Ausführungsbeispielen verbunden werden.

Gemäß Ausführungsbeispielen der Erfindung ist eine einfache und wenig aufwendige Verbindung insbesondere großflächiger Bauelemente ermöglicht. Aufgrund der im Vergleich zum Kleinmöbelbau verwendeten anders dimensionierten Verbinder können angesichts vorliegender Materialien und Produktdimensionierungen während der Montage auftretende Kräfte aufgenommen und gegebenenfalls im montierten Zustand auftretende Kräfte statisch abgetragen werden.

Gemäß einem exemplarischen Ausführungsbeispiel kann zwischen Zapfen und Tasche oder Nut eine formschlüssige oder kraftschlüssige Verbindung gebildet werden. Bei einer spitz zulaufenden Form erfolgt ein formschlüssiger Anschluss zwischen Zapfen und Nut. Durch konisch zulaufende Seitenkanten erfolgt ein kraftschlüssiger Anschluss. Horizontale schräge Kanten oder ein konischer Zulauf des Zapfens führen zu einem Zusammenzieheffekt bzw. zur spaltfreien Montage. Dies unterscheidet exemplarische Ausführungsbeispiele von Verbindern im Kleinmöbelbau.

Gemäß einem Ausführungsbeispiel kann an der Anschlussfläche des Zapfens mindestens eine Erhebung zum formschlüssigen Eingriff in mindestens eine entsprechende Vertiefung am ersten Holzbauteil vorgesehen sein. Eine solche Erhebung kann als Positionierhilfe zum Positionieren des Zapfens an dem ersten Holzbauteil verwendet werden. Auf diese Weise kann eine korrekte Montage der Verbindung sichergestellt werden.

Gemäß einem Ausführungsbeispiel können an der Anschlussfläche des Zapfens mindestens zwei Erhebungen zum formschlüssigen Eingriff in mindestens zwei entsprechende Vertiefungen am ersten Holzbauteil vorgesehen sein. Korrespondierend kann das erste Holzbauteil mindestens zwei Vertiefungen aufweisen, in die mindestens zwei Erhebungen an der Anschlussfläche des Zapfens formschlüssig eingreifen. Eine solche Konfiguration erlaubt eine besonders fehlerrobuste Positionierung des Zapfens in Bezug auf das erste Holzbauteil. Eine Fehlbedienung der Anordnung und der Verbindung kann dadurch ausgeschlossen werden.

Gemäß einem Ausführungsbeispiel können die mindestens zwei Erhebungen an der Anschlussfläche gleich große Flächen aufweisen. Dies ermöglicht eine Relativpositionierung des Zapfens bezüglich dem ersten Holzbauteil, ohne dass eine Fehlmontage auftreten kann.

Gemäß einem Ausführungsbeispiel können die mindestens zwei Erhebungen an der Anschlussfläche unterschiedlich große Flächen aufweisen. Dies ermöglicht es, den Zapfen am ersten Holzbauteil in zuverlässiger und stets korrekter Weise zu montieren, da die Erhebungen unterschiedlicher Flächen nur in einer bestimmten Orientierung des Zapfens relativ zum ersten Holzbauteil in deren Vertiefungen eingeführt sein können.

Gemäß einem Ausführungsbeispiel kann die mindestens eine Erhebung rund, insbesondere kreisförmig, oder polygonal, insbesondere rechteckförmig, sein. Vorzugsweise kann die mindestens eine polygonale Erhebung abgerundete Ecken aufweisen. Diese Formgebung der Erhebung, die korrespondierend zu der Formgebung der entsprechenden Vertiefung im ersten Holzbauteil ausgebildet sein kann, ist einfach fertigbar und erlaubt eine zuverlässige Anbringung des Zapfens am ersten Holzbauteil.

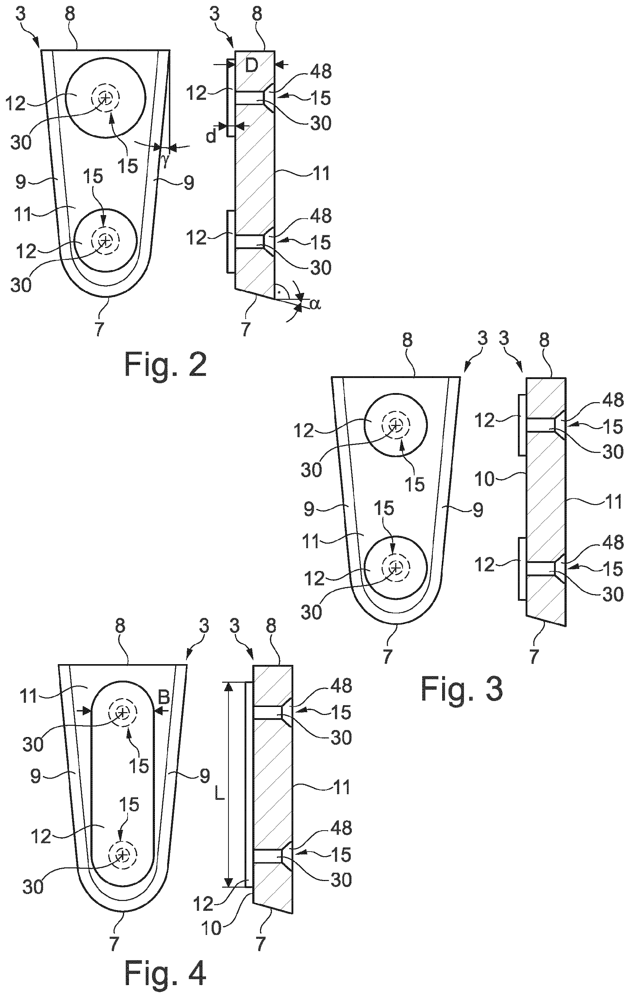

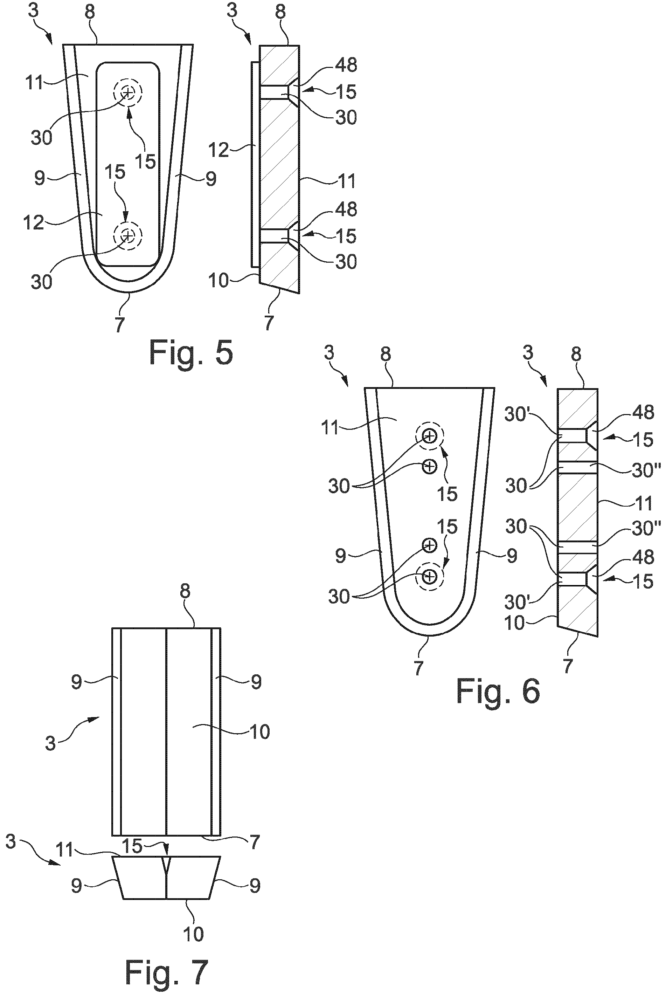

Gemäß einem Ausführungsbeispiel kann die mindestens eine Erhebung langgestreckt sein. Beispielsweise kann die mindestens eine Erhebung langgestreckt rechteckig mit abgerundeten Ecken sein (siehe beispielsweise Figur 5). Alternativ kann die mindestens eine Erhebung mit langgestrecktem zentralen rechteckigen Abschnitt und angeschlossenen halbkreisförmigen Endabschnitten ausgebildet sein (siehe beispielsweise Figur 4). Bei einer langgestreckten Ausgestaltung der Erhebung des Zapfens (und korrespondierend einer entsprechenden Vertiefung im ersten Holzbauteil) kann eine Kraftübertragung zwischen Zapfen und erstem Holzbauteil über eine große Fläche hinweg verteilt werden, sodass die Gefahr eines Ausreißens des Zapfens vom ersten Holzbauteil besonders zuverlässig vermieden werden können.

Gemäß einem Ausführungsbeispiel kann das mindestens eine Einführloch in dem Zapfen senkrecht zu der Anschlussfläche und/oder senkrecht zu der Stirnfläche verlaufen. Diese erlaubt eine Befestigung des Zapfens am ersten Holzbauteil auch mit relativ kurzen Schrauben oder Stiften und somit einfach und wenig aufwendig.

Gemäß exemplarischen Ausführungsbeispielen kann ein Zapfen in Einführrichtung ausgerichtet sein, quer zur Einführrichtung ausgerichtet sein oder auch schräg zur Einführrichtung angeordnet sein.

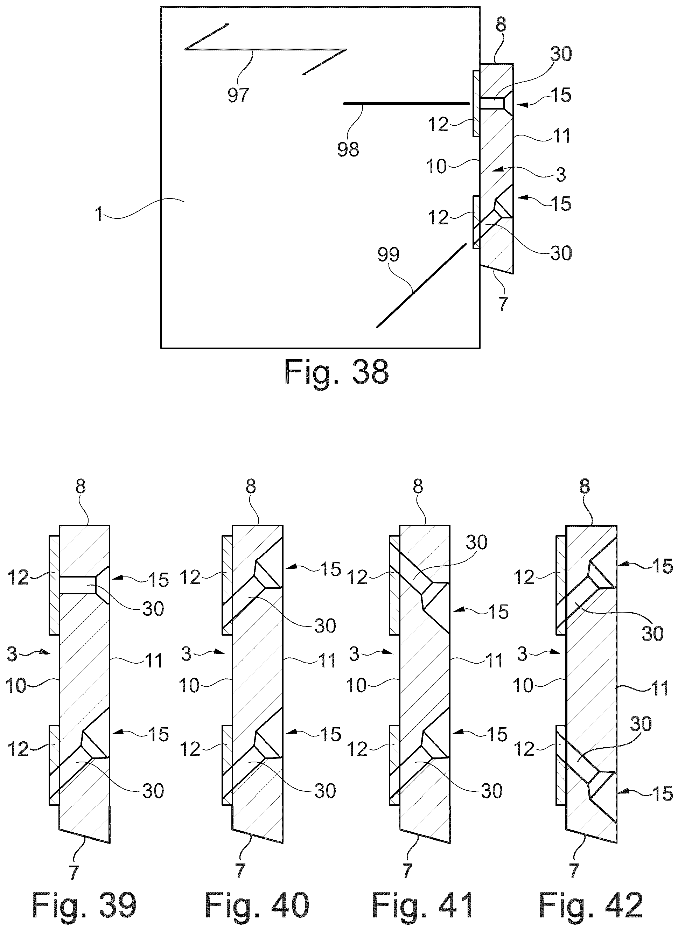

Gemäß einem Ausführungsbeispiel kann das mindestens eine Einführloch in dem Zapfen schräg zu der Anschlussfläche und/oder schräg zu der Stirnfläche verlaufen. Mithilfe eines solchen Zapfens ist es möglich, eine Schraube oder ein anderes Befestigungselement durch den schräg verlaufenden Durchgang in das erste Holzbauteil zu setzen (beispielsweise einzuschrauben oder einzuschlagen), so dass im befestigten Zustand das Befestigungselement überwiegend auf Zug beansprucht werden kann. Der Kopf des Befestigungselements liegt vorzugsweise an einer Anlagefläche des Zapfens an. Entstehende Kräfte werden effizient übertragen, so dass die bei der Verbindung von Holzbauteilen (wie Balken) in Längsrichtung auftretenden Kräfte in günstiger Weise auf die stiftförmigen Befestigungselemente übertragen werden. Eine zueinander und/oder zu einer Anschlussfläche schräge Anordnung von Schauben oder anderen lösbarer Verbindungen kann in Hinblick auf eine Faserrichtung von Holz des ersten Holzbauteils zu einer Verbesserung der Ausziehtragfähigkeit führen, vergleiche Figuren 38-42.

Gemäß einem Ausführungsbeispiel kann ein Winkel zwischen einer Verlaufsrichtung des mindestens einen Einführlochs in dem Zapfen einerseits und einer Normalen (oder Senkrechten) der Anschlussfläche und/oder einer Normalen (oder Senkrechten) der Stirnfläche andererseits in einem Bereich von 15° bis 75°, insbesondere in einem Bereich von 30° bis 60°, liegen. Vorzugsweise liegt der Winkel bei 45°±5°. In den genannten Winkelbereichen ist eine besonders effiziente Kraftübertragung zwischen Zapfen und erstem Holzbauteil ermöglicht, und zwar mit signifikanten Kraftkomponenten parallel und senkrecht zur Oberfläche des ersten Holzbauteils.

Gemäß einem Ausführungsbeispiel kann eine Mehrzahl von Einführlöchern in dem Zapfen schräg zueinander und/oder schräg zu der Anschlussfläche und/oder schräg zu der Stirnfläche verlaufen. Insbesondere können mindestens zwei oder sogar mindestens drei lösbare Verbindungen mittels Schrauben oder Nägeln zwischen dem Zapfen und dem ersten Holzbauteil gebildet werden, und zwar vorzugsweise entlang von mehreren Erstreckungsrichtungen entsprechend unterschiedlichen Winkelrichtungen. Mit anderen Worten können sich unterschiedliche lösbare Verbindungen entlang unterschiedlicher Erstreckungsrichtungen (zum Beispiel windschief zueinander) durch den Zapfen hindurch in das erste Holzbauteil hinein erstrecken. Dies erhöht die Widerstandsfähigkeit des Zapfens gegen unerwünschtes Abziehen vom ersten Holzbauteil durch Aufbringung einer Zugkraft. Somit erhöht diese Maßnahme signifikant die Auszugskraft, die erforderlich ist, den Zapfen vom ersten Holzbauteil abzuziehen.

Gemäß einem Ausführungsbeispiel kann sich das mindestens eine Einführloch schräg durch die mindestens eine Erhebung hindurch erstrecken. Mit anderen Worten kann sich eine jeweilige schräg montierte lösbare Verbindung nicht nur durch den Zentralbereich des Zapfens, sondern auch durch die daran vorzugsweise einstückig angeschlossene Erhebung hindurch bis in das erste Holzbauteil hinein erstrecken. Dadurch kann eine besonders sichere Montage des Zapfens am ersten Holzbauteil mit einer hohen Auszugskraft kombiniert werden.

Gemäß einem Ausführungsbeispiel kann der Zapfen (der auch als Verbinderzapfen bezeichnet werden kann) in einer Querschnittsansicht trapezförmig sein. In entsprechender Weise kann die Tasche oder Nut in einer Querschnittsansicht trapezförmig sein. Diese Geometrie kombiniert eine einfache Herstellbarkeit mit einer zuverlässigen formschlüssigen Verankerung des Zapfens in der Tasche oder Nut des zweiten Holzbauteils. Ferner kann dadurch eine erleichterte Zentrierung des Anschlusses erreicht werden.

Gemäß einem Ausführungsbeispiel kann der Zapfen in einer Querschnittsansicht zueinander geneigte Seitenflächen aufweisen, die über Rundungen in die Stirnfläche übergehen. In entsprechender Weise kann die Tasche oder Nut in einer Querschnittsansicht zueinander geneigte innere Seitenflächen aufweisen, die über Rundungen in eine Bodenfläche übergehen. Eine solche Konfiguration vermeidet einen abrupten Übergang von den geneigten Seitenflächen zu der horizontalen Stirnfläche und bietet vorteilhafte Eigenschaften in Hinblick auf Kerbspannungen. Eine untere schräg gestellte Kante (die auch als Stirnseite bezeichnet werden kann) des Verbinderzapfens führt zu einem Zusammenzug der Bauteile.

Gemäß einem Ausführungsbeispiel kann der Zapfen in einer Querschnittsansicht zueinander geneigte und jeweils abknickende Seitenflächen aufweisen, die, insbesondere über eine Kante, in die Stirnfläche übergehen. In entsprechender Weise kann die Tasche oder Nut in einer Querschnittsansicht zueinander geneigte und jeweils abknickende innere Seitenflächen aufweisen, die, insbesondere über eine Kante, in eine Bodenfläche übergehen. Gemäß einer solchen Konfiguration kann an einer jeweiligen Seitenfläche des Zapfens ein erster Abschnitt mit einem ersten Neigungswinkel über eine Kante oder einen Knick an einen zweiten Abschnitt mit einem anderen zweiten Neigungswinkel angeschlossen sein. Dies erleichtert weiter den Einlauf des Zapfens in die Tasche oder Nut des zweiten Holzbauteils. Letztere kann entsprechend gestaltet sein.

Gemäß einem Ausführungsbeispiel kann das zweite Holzbauteil seitlich von der Tasche oder Nut einen Verstärkungskragen aufweisen. Beispielsweise kann der Verstärkungskragen als ringförmiger seitlicher Fortsatz um die Tasche oder Nut herum ausgebildet sein, um unmittelbar an eine Außenfläche des ersten Holzbauteils anzugrenzen. Dadurch kann eine mechanische Verstärkung der Tasche oder Nut (insbesondere in einem Fräsbereich) erreicht werden, indem der Verstärkungskragen die Verbindung stärkt. Die Funktion des Verstärkungskragens ist eine mechanische Verstärkung der Nut im Fräsbereich. Dort entsteht in der Regel der Bruch durch Überschreitung der Materialfestigkeit. Dieser Bruch kann durch das außen aufliegende Verstärkungsmaterial verhindert werden, das wie eine Armierung funktioniert. Diese Verstärkung kann durchgängig über den gesamten Anschluss ausgebildet werden oder als Kragen vertieft in das Material eingelassen werden.

Gemäß einem Ausführungsbeispiel kann eine schalldämmende Schicht zwischen dem ersten Holzbauteil und dem Zapfen und/oder zwischen dem Zapfen und dem zweiten Holzbauteil vorgesehen werden. Die schalldämmende Schicht kann an dem ersten Holzbauteil, an dem Zapfen und/oder an dem zweiten Holzbauteil angebracht sein oder als separates Einlegeteil ausgebildet werden. Die Aufbringung einer Zwischenschicht kann vorgenommen werden, um eine Schallentkopplung zu erreichen. Beispielsweise kann eine schalldämmende Schicht zwischen die Bauteile eingelegt werden. Es ist auch möglich, die Seitenkante des Verbinderzapfens damit zu überkleben.

Gemäß einem Ausführungsbeispiel kann der Zapfen in einer Querschnittsansicht zueinander geneigte und Stufen aufweisende Seitenflächen aufweisen. In entsprechender Weise kann die Tasche oder Nut in einer Querschnittsansicht zueinander geneigte und Stufen aufweisende innere Seitenflächen aufweisen. Ein stufiger Formschluss kann die Zuverlässigkeit der Befestigung zwischen den beiden Holzbauteilen mittels des Zapfens weiter verbessern.

Gemäß einem Ausführungsbeispiel kann das zweite Holzbauteil in der Tasche oder Nut eine Klebstoffstruktur aufweisen. Alternativ oder ergänzend kann der Zapfen in einer Querschnittsansicht zueinander geneigte Seitenflächen aufweisen, auf und/oder in denen eine Klebstoffstruktur gebildet sein kann. Die formschlüssige Verbindung zwischen Zapfen und zweitem Holzbauteil kann weiter verstärkt werden, indem zwischen den äußeren Seitenwänden des Zapfens und den inneren Seitenwänden des zweiten Holzbauteils im Bereich der Tasche oder Nut zusätzlich eine Klebstoffverbindung ausgebildet wird.

Gemäß einem Ausführungsbeispiel kann der Zapfen in einer Querschnittsansicht doppeltrapezförmig sein. In entsprechender Weise kann die Tasche oder Nut in einer Querschnittsansicht doppeltrapezförmig sein. Der Zapfen kann zum Beispiel durch zwei gestapelte und miteinander verbundene oder einstückige Trapeze oder Kegelstümpfe gebildet sein. Eine solche Geometrie erlaubt einen besonders zuverlässigen Formschluss zwischen dem Zapfen und dem zweiten Holzbauteil, wobei letzteres ebenfalls eine Tasche oder Nut in Doppeltrapezform aufweisen kann.

Gemäß einem Ausführungsbeispiel kann das mindestens eine Einführloch des Zapfens eine, insbesondere kegelstumpfförmige oder kreiszylindrische, Aufnahme für einen Schraubenkopf aufweisen. Insbesondere kann eine solche Aufnahme einen Schraubenkopf einer Senkkopfschraube formschlüssig aufnehmen und in dem Zapfen ohne Überstand versenken.

Gemäß einem Ausführungsbeispiel kann der Zapfen in einer Draufsicht schildförmig sein. Gemäß einem anderen Ausführungsbeispiel kann der Zapfen in einer Draufsicht dreieckig sein. Ein Einlauf des Zapfens in die Tasche oder Nut kann bei diesen beiden Ausführungsformen besonders fehlerrobust erfolgen.

Gemäß einem Ausführungsbeispiel kann der Zapfen in einer Draufsicht einen dreieckigen Abschnitt und einen sich daran anschließenden rechteckigen Abschnitt aufweisen. Der dreieckige Abschnitt kann einen Einlauf des Zapfens in eine Soll-Position in der Tasche oder Nut fördern. Der rechteckige Abschnitt kann die Handhabung des Zapfens vereinfachen, kann durch die Schrägstellung der unteren horizontalen Seitenkante ein Zusammenziehen der Bauteile bewirken, kann eine Flächenerhöhung bewirken und/oder kann eine rückseitige Anschlagfläche bilden, wenn der Zapfen an einer Soll-Position in der Tasche oder Nut angekommen ist.

Gemäß einem Ausführungsbeispiel kann der Zapfen an der Anschlussfläche und/oder an der Stirnfläche eine Reibungserhöhungsstruktur (insbesondere eine reibungserhöhende Fläche) aufweisen. Alternativ oder ergänzend kann das erste Holzbauteil und/oder das zweite Holzbauteil an einem dem Zapfen zugewandten Oberflächenabschnitt eine Reibungserhöhungsstruktur aufweisen. Bei einer Reibungserhöhungsstruktur kann es sich um eine physische Struktur handeln, die einen lokal erhöhten Reibungskoeffizienten im Vergleich zu ihrer Umgebung aufweist. Zum Beispiel kann eine solche Reibungserhöhungsstruktur eine Reibplatte, ein aufgerauter Oberflächenabschnitt, ein Oberflächenabschnitt aus einem Material mit höherem Reibungskoeffizienten gegenüber der Umgebung, ein Oberflächenabschnitt mit Reibungserhöhungserhebungen zwischen Reibungserhöhungssenkungen, ein Streifen Schmirgelpapier, ein Oberflächenabschnitt mit Pyramidenstrukturen oder Wellenstrukturen, etc. sein. Durch die Aufrauhung an der Reibungserhöhungsstruktur liegt der Zapfen mit einer höheren Haftreibung an dem ersten Holzbauteil und/oder an dem zweiten Holzbauteil an. Die durch die Reibungserhöhungsstruktur vergrößerte Haftreibung oder Haftung zwischen den beteiligten Elementen (d.h. Zapfen, erstes Holzbauteil und/oder zweites Holzbauteil) wirkt einer Verschiebung der Elemente relativ zueinander entgegen, d.h. die initiale Verschiebung der Elemente relativ zueinander ist erschwert. Eine relative Verschiebung der Elemente zueinander erfolgt somit erst bei - im Vergleich zu einer Holzverbindung ohne Reibungserhöhungsstruktur - erhöhten Traglasten. Die Aufrauhung der Anschlussseite der Reibplatte kann durch Vorsprünge oder Vertiefungen, beispielsweise Einfräsungen, erfolgen. Vorteilhaft ist, dass die Rauigkeit der jeweiligen Anschlussseite erhöht wird, wodurch die Haftreibung zu den zu verbindenden Anschlusselementen erhöht wird.

Durch das Vorsehen mindestens einer Reibungserhöhungsstruktur am Zapfen - und alternativ oder ergänzend am ersten Holzbauteil und/oder am zweiten Holzbauteil - kann mittels Reibung die Schertragfähigkeit erhöht werden, beispielsweise um ca. 40%. Eine solche Reibfläche kann erhalten werden, wenn an der Verbinderseite plan abgefräst wird. Beispielsweise kann die Innenfläche statt plan auch mit einer Pyramidenstruktur oder einer horizontalen Dreiecksline ausgestaltet werden. Insbesondere kann die Höhe der Vertiefungen einer Reibungserhöhungsstruktur in einem Bereich von 0,02 mm bis 3 mm liegen, vorzugsweise in einem Bereich von 0,1 mm bis 1 mm, beispielsweise ca. 0,3±0,2 mm. Das ist insbesondere bei einem kreisförmigen Mehrfachschraubenverbinder von großem Vorteil, aber auch in vielen anderen Ausführungsformen.

Gemäß einem Ausführungsbeispiel kann das mindestens eine Einführloch mindestens ein senkkopfschraubenkomplementäres Einführloch und mindestens ein zylinderstiftkomplementäres Einführloch aufweisen. Jedes dieser Einführlöcher kann sich senkrecht oder schräg zwischen der Anschlussfläche und der Stirnfläche des Zapfens erstrecken. Die beschriebene Vorkehrung an dem Zapfen kann sowohl das Montieren des Zapfens am ersten Holzbauteil mittels mindestens einer Senkkopfschraube als auch das Montieren des Zapfens am ersten Holzbauteil mittels eines Zylinderstifts (mit oder ohne Gewinde) unterstützen. Auf diese Weise ist ein universell verwendbarer Zapfen bereitgestellt, der von einem Benutzer abhängig von den Bedürfnissen einer jeweiligen Anwendung flexibel unter Verwendung von Schrauben (beispielsweise auch durchgehenden Schrauben) und/oder Stiften am ersten Holzbauteil anbringbar ist.

Gemäß einem Ausführungsbeispiel kann in einer Draufsicht der Zapfen einen rechteckigen Umriss haben. Ein solcher Zapfen ist kostengünstig fertigbar und erlaubt eine Befestigung an zweiten Holzbauteil mit einer homogenen Lastverteilung über einen großen Flächenbereich hinweg. Kraftspitzen können dadurch vermieden werden.

Gemäß einem Ausführungsbeispiel kann in einer Draufsicht der Zapfen einen rechteckigen Zentralabschnitt und zwei abgerundete (beispielsweise halbkreisförmige) Endabschnitte aufweisen. Auch dies erlaubt eine homogene Lastverteilung über einen großen Raumbereich hinweg, wobei die abgerundeten Enden die Einführung des Zapfens in die Tasche oder Nut des zweiten Holzbauteils erleichtern, beispielsweise nach dem Prinzip einer Einlaufschräge.

Gemäß einem Ausführungsbeispiel kann in einer Seitenansicht der Zapfen einen zumindest abschnittsweise konischen Umriss haben. Ein solcher konischer Umriss kann beispielsweise zwischen der Anschlussfläche und der Stirnfläche des Zapfens gebildet sein. Ein solcher konischer Zapfen fördert vorteilhaft ein spaltfreies Heranziehen der Holzbauteile zueinander, während der Zapfen in die Tasche oder Nut des zweiten Holzbauteils eingeführt wird.

Gemäß einem Ausführungsbeispiel kann in einer Seitenansicht der Zapfen einen ersten konischen Abschnitt und einen sich daran anschließenden und gegenüber diesem abknickenden zweiten konischen Abschnitt haben. Auch diese Geometrie fördert ein spaltfreies Heranziehen der Holzbauteile zueinander während des Verbindungsprozesses.

Gemäß einem Ausführungsbeispiel kann die Tasche oder Nut unmittelbar in dem zweiten Holzbauteil gebildet sein, insbesondere ausschließlich durch eine Holzfläche des zweiten Holzbauteils begrenzt. Dies bedeutet, dass die Tasche oder Nut in dem zweiten Holzbauteil direkt geformt werden kann, ohne dass hierfür ein Beschlagteil oder dergleichen notwendig ist. Zum Beispiel kann die Tasche oder Nut mit den oben beschriebenen Merkmalen direkt in dem Holz des zweiten Holzbauteils gebildet und von diesem unmittelbar räumlich begrenzt werden. Dies kann zum Beispiel dadurch bewerkstelligt werden, dass die Tasche oder Nut in das zweite Holzbauteil direkt eingefräst wird. Dies führt zu einer Holz-Holz-Holz-Verbindung zwischen den beiden Holzbauteilen und einem aus Holz gebildeten Zapfen. Dies bewirkt eine besonders zuverlässige Verbindung und unterdrückt unterschiedliche Wärmeausdehnungen beteiligter Komponenten aus unterschiedlichen Materialien. Außerdem kann beim unmittelbaren Bilden von Tasche oder Nut im zweiten Holzbauteil selbst eine besonders kompakte und einfach herzustellende Verbindung erreicht werden.

In einer besonders zweckmäßigen Ausführung kann die lösbare Verbindung zum Beispiel als Schrauben- oder Stiftverbindung mit einer oder mehreren Schrauben, Stiften oder anderen ähnlichen Befestigungselementen ausgeführt sein. Über die Schrauben oder entsprechende Befestigungselemente sind die Zapfen einfach und schnell an beliebigen Stellen montierbar und können bei Bedarf auch versetzt oder nachjustiert werden.

Gemäß einer möglichen Ausgestaltung der Erfindung weist der Zapfen einen sich von einer dem ersten Holzbauteil zugewandten inneren Anschlussfläche zu einer dem zweiten Holzbauteil zugewandten äußeren Stirnfläche hin erweiternden Querschnitt und der Haltebereich der Tasche oder Nut einen sich von einer stirnseitigen Außenfläche des zweiten Holzbauteils nach innen erweiternden Querschnitt auf. Durch eine derartige Kontur können auch Zugkräfte mit hoher Stabilität übertragen werden.

Um eine sichere und positionsgenaue Verbindung zwischen dem Zapfen und dem ersten Holzbauteil zu erreichen, kann an der dem ersten Holzbauteil zugewandten inneren Anschlussfläche des Zapfens eine zum Beispiel in Art einer Passfeder ausgeführte Erhebung zum formschlüssigen Eingriff in eine entsprechende Vertiefung am ersten Holzbauteil vorgesehen sein.

Die Wand-, Decken-, Fassaden- oder Dachelementverbindung kann als Schwalbenschwanzverbindung mit geneigten äußeren Seitenflächen an dem Zapfen und entsprechend geneigten inneren Seitenflächen in der Tasche oder Nut ausgebildet sein. In einer besonders stabilen und tragfähigen Ausführung kann der Zapfen in Form eines sich in Einschubrichtung verjüngenden Keils ausgebildet sein. Der Zapfen kann aber auch die Form eines Kegelstumpfs oder die Form eines blockförmigen Einschubteils aufweisen.

In einer weiteren möglichen Ausführung kann die Wand-, Decken-, Fassaden- oder Dachelementverbindung auch als T-Verbindung mit einer T-Nut und einem zugehörigen Zapfen mit T-förmigen Querschnitt ausgeführt sein.

Die Seitenflächen der Tasche oder Nut und auch die Außenflächen des Zapfens verlaufen in Einschubrichtung des Zapfens beispielsweise keilförmig aufeinander zu. Der Zapfen und die Tasche oder Nut können aber auch eine gleichbleibende Querschnittsfläche aufweisen.

Der Zapfen (der auch als Verbinderzapfen bezeichnet werden kann) kann Holz oder Holzwerkstoff, vorzugsweise Furnierschichtholz oder Hartholz, aufweisen, Er kann alternativ oder ergänzend auch Kunststoff, Kunstharzfasern oder Metall aufweisen. Allgemeiner kann der Zapfen Holz, Metall, Kunststoff, Beton, Keramik und/oder einen Faserverbund aufweisen.

Bevorzugt kann es sein, dass der Zapfen Holz aufweist oder daraus besteht. Das Ausbilden einer Verbindung zwischen einem ersten Holzbauteil und einem zweiten Holzbauteil mittels eines aus Holz bestehenden Zapfens am ersten Holzbauteil, der in eine Tasche oder Nut unmittelbar am zweiten Holzbauteil eingeführt wird, führt in nachhaltiger Art und Weise und gleichsam vorteilhaft zu einer "Holz-Holz-Holz-Verbindung". Holz als Zapfenmaterial hat den Vorteil eines geringen Gewichts bei großer Festigkeit und führt bei Verbindung zweier Holzbauteile zu geringen thermischen Spannungen aufgrund der äußerst ähnlichen thermischen Ausdehnungskoeffizienten der Holzbauteile und des Holz-Zapfens. Auch hat sich ein solcher Holz-Zapfen als äußerst geeignet erwiesen, im verbundenen Zustand der Holzbauteile einem unerwünschten Lösen der Verbindung entgegenzuwirken.

Beispielsweise kann der Zapfen in Einführrichtung in die Tasche oder Nut eine Länge in einem Bereich von 5 cm bis 20 cm, insbesondere von 7 cm bis 15 cm, aufweisen. Quer zur Einführrichtung in die Tasche oder Nut kann der Zapfen beispielsweise eine Breite in einem Bereich von 2 cm bis 10 cm, insbesondere von 3 cm bis 7 cm, aufweisen. Darüber hinaus kann der Zapfen eine Höhe in einem Bereich von 1 cm bis 10 cm, insbesondere von 2 cm bis 7 cm, aufweisen.

Bei den stab-, balken- oder plattenförmigen Holzbauteilen für eine Wand-, Decken-, Fassaden- oder Dachelementverbindung kann es sich um massive Holzbauteile handeln, wie sie insbesondere beim Hausbau zum Einsatz kommen. Beispielsweise können solche Holzbauteile Holzbalken wie Dachbalken, insbesondere Sparren, Pfetten und/oder Pfosten, für ein Holzdach sein. Es ist auch möglich, als Holzbauteile massive Holzpaneele vorzusehen, wie sie im Hausbau zum Einsatz kommen. Beispielsweise können die Holzbauteile mindestens 2 m lang sein und/oder mindestens 20 kg wiegen. In anderen Ausführungsformen können die Holzbauteile auch kürzer sein, beispielsweise bis zu 50 cm lang sein. Die Holzbauteile können aus Hartholz, Weichholz, Echtholz, Furnierholz und/oder Spanholz aufgebaut sein. Die massiven oder zusammengesetzten Holzbauteile können aus Hartholz, Weichholz, Holzwerkstoffen auf Holz, Gips oder Zement wie beispielsweise Furnierschichtholz und/oder auf Spänen oder Strands basierenden Holzwerkstoffen aufgebaut sein.

Im Folgenden werden exemplarische Ausführungsbeispiele der vorliegenden Erfindung mit Verweis auf die folgenden Figuren detailliert beschrieben.
Figur 1 zeigt eine Wand-, Decken-, Fassaden- oder Dachelementverbindung in einer Unteransicht, geschnittenen Seitenansicht und Draufsicht gemäß einem exemplarischen Ausführungsbeispiel der Erfindung.
Figur 2 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Draufsicht und einer Seitenansicht.
Figur 3 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 4 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 5 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 6 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 7 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Seitenansicht.
Figur 8 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und in Seitenansichten.
Figur 9 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und in Seitenansichten.
Figur 10 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und in Seitenansichten.
Figur 11 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und in Seitenansichten.
Figur 12 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und in Seitenansichten.
Figur 13 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Querschnittsansicht.
Figur 14 zeigt eine Anordnung mit Zapfen und lösbarer Verbindung für eine Wand-, Decken-, Fassaden- oder Dachelementverbindung gemäß einem anderen exemplarischen Ausführungsbeispiel der Erfindung in einer Draufsicht und einer Querschnittsansicht.
Figur 15 zeigt einen Zapfen einer Wand-, Decken-, Fassaden- oder Dachelementverbindung gemäß einem anderen exemplarischen Ausführungsbeispiel der Erfindung in einer Querschnittsansicht.
Figur 16 zeigt einen Zapfen einer Wand-, Decken-, Fassaden- oder Dachelementverbindung gemäß einem anderen exemplarischen Ausführungsbeispiel der Erfindung in einer Querschnittsansicht.
Figur 17 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 18 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 19 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 20 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 21 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 22 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 23 zeigt ein zweites Holzbauteil mit einer Tasche oder Nut für einen Zapfen an einem ersten Holzbauteil einer Wand-, Decken-, Fassaden- oder Dachelementverbindung gemäß einem anderen exemplarischen Ausführungsbeispiel der Erfindung in einer Querschnittsansicht.
Figur 24 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 25 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 26 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 27 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 28 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 29 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 30 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 31 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 32 zeigt einen Zapfen für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht.
Figur 33 zeigt einen Zapfen für eine Wand-, Decken-, Fassaden- oder Dachelementverbindung gemäß einem anderen exemplarischen Ausführungsbeispiel der Erfindung in einer Draufsicht.
Figur 34 zeigt einen Zapfen für eine Wand-, Decken-, Fassaden- oder Dachelementverbindung gemäß einem anderen exemplarischen Ausführungsbeispiel der Erfindung in einer Draufsicht.
Figur 35 zeigt einen Zapfen für eine Wand-, Decken-, Fassaden- oder Dachelementverbindung gemäß einem anderen exemplarischen Ausführungsbeispiel der Erfindung in einer Draufsicht.
Figur 36 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Draufsicht und einer Seitenansicht.
Figur 37 zeigt eine Reibungserhöhungsstruktur für einen Zapfen gemäß einem exemplarischen Ausführungsbeispiel der Erfindung.
Figur 38 zeigt einen Zapfen und eine lösbare Verbindung an einem ersten Holzbauteil gemäß einem exemplarischen Ausführungsbeispiel der Erfindung mit Einführlöchern durch den Zapfen, die sich entlang unterschiedlicher Richtungen erstrecken.
Figur 39 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Querschnittsansicht, bei der ein Einführloch senkrecht zu einer Anschlussfläche des Zapfens orientiert ist und ein anderes Einführloch schräg zu der Anschlussfläche des Zapfens orientiert ist.
Figur 40 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Querschnittsansicht, bei der beide Einführlöcher schräg zu der Anschlussfläche des Zapfens und parallel zueinander orientiert sind.
Figur 41 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Querschnittsansicht, bei der beide Einführlöcher schräg zu der Anschlussfläche des Zapfens und schräg zueinander orientiert sind.
Figur 42 zeigt eine Anordnung mit Zapfen und lösbarer Verbindung für eine Wand-, Decken-, Fassaden- oder Dachelementverbindung gemäß einem exemplarischen Ausführungsbeispiel der Erfindung in einer Querschnittsansicht, bei der beide Einführlöcher schräg zu der Anschlussfläche des Zapfens und schräg zueinander orientiert sind.

Gleiche oder ähnliche Komponenten in unterschiedlichen Figuren sind mit gleichen Bezugsziffern versehen.

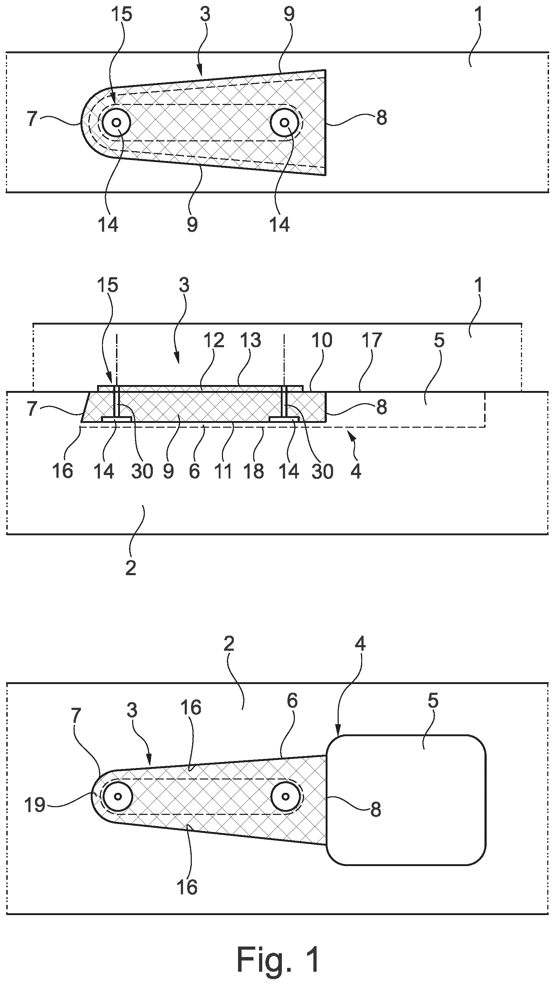

**Figur 1** zeigt eine Wand-, Decken-, Fassaden- oder Dachelementverbindung in einer Unteransicht, geschnittenen Seitenansicht und Draufsicht gemäß einem exemplarischen Ausführungsbeispiel der Erfindung.

Die Wand-, Decken-, Fassaden- oder Dachelementverbindung umfasst einen am ersten Holzbauteil 1 angeordneten Zapfen 3 mit einer sich in Richtung eines zweiten Holzbauteils 2 erweiternden Außenkontur und eine am zweiten Holzbauteil 2 vorgesehene Tasche oder Nut 4, die einen Einführungsbereich 5 zum Einführen des Zapfens 3 und einen Haltebereich 6 mit einer an die Außenkontur des Zapfens 3 angepassten, sich nach innen erweiternden Innenkontur zur Halterung des Zapfens 3 aufweist.

Bei der in Figur 1 in verschiedenen Ansichten gezeigten Ausführung weist der Zapfen 3 eine sich in Einschubrichtung verjüngende Keilform mit einem trapezförmigen Querschnitt auf. Der Zapfen 3 enthält eine in Einschubrichtung gesehen schlankere vordere Endfläche 7 und eine breitere hintere Endfläche 8, wobei die vordere Endfläche 7 abgerundet ist und die hintere Endfläche 8 geradlinig verläuft. Der Zapfen 3 weist außerdem geneigte äußere Seitenflächen 9 auf. Die Seitenflächen 9 sind so geneigt, dass sich der Zapfen 3 im Querschnitt von einer dem ersten Holzbauteil 1 zugewandten inneren Anschlussfläche 10 zu einer dem zweiten Holzbauteil 2 zugewandten äußeren Stirnfläche 11 hin trapezförmig erweitert. Der Zapfen 3 weist an seiner dem ersten Holzbauteil 1 zugewandten inneren Anschlussfläche 10 eine in Art einer Passfeder ausgebildete Erhöhung 12 zum formschlüssigen Eingriff in eine entsprechende Vertiefung 13 im ersten Holzbauteil 1 auf. Durch eine hier als Schraubverbindung mit mehreren Schrauben 14 ausgeführte lösbare Verbindung 15 ist der Zapfen 3 an dem ersten Holzbauteil 1 befestigt.

Wie insbesondere aus der unteren Ansicht der Figur 1 hervorgeht, weist die zu dem Zapfen 3 gehörende Tasche oder Nut 4 in dem zweiten Holzbauteil 2 einen verbreiterten Einführungsbereich 5 und eine schlankeren Haltebereich 6 auf. Der Haltebereich 6 ist derart ausgeführt, dass die geneigten inneren Seitenflächen 16 der Tasche oder Nut 4 in diesem Bereich so geneigt sind, dass sich die Tasche oder Nut 4 im Haltebereich 6 im Querschnitt von einer stirnseitigen Außenfläche 17 des zweiten Holzbauteils 2 zu einer inneren Bodenfläche 18 hin trapezförmig erweitert. Auch die Tasche oder Nut 4 weist im Haltebereich 4 einen sich entsprechend der Form des Zapfens 3 in Einschubrichtung des Zapfens 3 keilförmig verjüngenden Verlauf mit einer sich vom Einführungsbereich 5 bis zu einem abgerundeten inneren Ende 19 hin verringernden Breite auf. Der Haltebereich 6 der Nut 4 kann zum Beispiel mit einem Schwalbenschwanzfräser hergestellt werden.

Insbesondere zeigt Figur 1 eine Anordnung für eine Wand-, Decken-, Fassaden- oder Dachelementverbindung zur Verbindung stab-, balken- oder plattenförmiger Holzbauteile 1, 2. Diese Anordnung weist den Zapfen 3 mit Einführlöchern 30 und zusätzlich die von dem Zapfen 3 separate lösbare Verbindung 15 (auch als lösbare Verbindungsstruktur bezeichnet) auf, die hier in Form von zwei Schrauben 14 ausgebildet ist. Jede dieser Schrauben 14 wird lösbar durch ein zugeordnetes der Einführlöcher 30 des Zapfens 3 hindurchgeführt und in das erste Holzbauteil 1 eingeführt, wodurch der Zapfen 3 am ersten Holzbauteil 1 montiert ist. Der Zapfen 3 ist somit ausgebildet, mittels der lösbaren Verbindung 15 an seiner Anschlussfläche 10 an dem ersten Holzbauteil 1 befestigt zu werden. Der Zapfen 3 ist mit einer sich von der Anschlussfläche 10 in Richtung seiner gegenüberliegenden Stirnfläche 11, die zu dem zweiten Holzbauteil 2 weist, erweiternden Außenkontur ausgebildet. Ferner ist der Zapfen 3 zur Einführung in den Einführungsbereich 5 der am zweiten Holzbauteil 2 angeordneten Tasche oder Nut 4 ausgebildet. Darüber hinaus ist der Zapfen 3 zur Halterung, Fixierung oder Festlegung in dem Haltebereich 6 der Tasche oder Nut 4 mit einer an die Außenkontur des Zapfens 3 angepassten, sich nach innen erweiternden Innenkontur ausgebildet.

Die in Figur 1 dargestellte Wand-, Decken-, Fassaden- oder Dachelementverbindung weist also die Anordnung mit Zapfen 3 und lösbarer Verbindung 15 auf, die - auch reversibel - an dem ersten Holzbauteil 1 angebracht werden kann, bevor der Zapfen 3 in die Tasche oder Nut 4 des zweiten Holzbauteils 2 eingeführt wird, um die beiden Holzbauteile 1, 2 miteinander zu verbinden.

Das erste Holzbauteil 1 wird also an der Anschlussfläche 10 des Zapfens 3 mittels der lösbaren Verbindung 15 befestigt. An das zweite Holzbauteil 2 wird der Zapfen 3 angeschlossen, indem das zweite Holzbauteil 2 die Tasche oder Nut 4 mit dem Einführungsbereich 5 zum Einführen des Zapfens 3 und dem Haltebereich 6 zum Haltern des Zapfens 3 aufweist. Der Haltebereich 6 ist mit einer an die Außenkontur des Zapfens 3 angepassten, sich nach innen erweiternden Innenkontur ausgebildet, sodass eine formschlüssige Verbindung zwischen Zapfen 3 und zweitem Holzbauteil 2 in der Tasche oder Nut 4 ausgebildet werden kann.

Figuren 2-37 zeigen verschiedene Ausführungsformen von Anordnungen aus Zapfen 3 und lösbaren Verbindungen 15 sowie ersten und/oder zweiten Holzbauteilen 1, 2 und Wand-, Decken-, Fassaden- oder Dachelementverbindungen, die das Prinzip von Figur 1 weiter verbessern. Zur Vermeidung von Wiederholungen wird für jede von Figuren 2-37 auf die Beschreibung von Figur 1 Bezug genommen, die auch für Figuren 2-37 gilt, sofern sich nicht aus den nachfolgenden Beschreibungen ein anderes ergibt. Die einzelnen Elemente aus Figuren 1-37 können in beliebiger Weise miteinander kombiniert werden.

Figur 1 zeigt eine kreisförmige Vertiefung in einem Oberflächenbereich der Einführlöcher 30. Dort kann eine Tellerkopfschraube gesetzt werden (nicht gezeigt). Bei anderen Ausführungsformen ist eine Senkkopfform in einem Oberflächenbereich der Einführlöcher 30 gebildet, in die eine Senkkopfschraube gesetzt werden kann (nicht gezeigt).

**Figur 2** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Draufsicht (linke Darstellung) und einer Seitenansicht (rechte Darstellung).

In Figur 2 ist zu erkennen, dass an der Anschlussfläche 10 des Zapfens 3 zwei Erhebungen 12 zum formschlüssigen Eingriff in zwei entsprechende Vertiefungen 13 an einem nicht gezeigten ersten Holzbauteil 1 vorgesehen sind. Gemäß Figur 2 weisen die zwei Erhebungen 12 auf der Anschlussfläche 10 unterschiedlich große Flächen und gleiche geometrische Formen auf, nämlich Kreise.

Der Zapfen 3 gemäß Figur 2 hat also zwei Erhebungen 12 auf der Anschlussfläche 10 mit unterschiedlich großen Flächen. In der Draufsicht des Zapfens 3 gemäß Figur 2 ist zu erkennen, dass sich dieser in Einführrichtung verjüngt. Korrespondierend hierzu ist die Erhebung 12 an der in Einführrichtung vorderen Endfläche 7 des Zapfens 3 flächenkleiner als die Erhebung 12 an der in Einführrichtung hinteren Endfläche 8 des Zapfens 3. Bei der Ausführungsform gemäß Figur 2 sind also die Größen der Erhebungen 12 am Zapfen 3 unterschiedlich. Anders ausgedrückt sind geometrische Größenunterschiede zwischen zwei Erhebungen 12 am Zapfen 3 vorgesehen. Dies erfüllt die Funktion, dass dadurch die Einbaurichtung des Verbinderzapfens 3 bei einer unterschiedlichen Ausbildung der Größe des Anschlusszapfens bzw. der Erhebung 12 vorgegeben ist. Dies macht die Benutzung des Zapfens 3 für einen Benutzer intuitiv und beugt einer Fehlbenutzung vor.

Gemäß Figur 2 verläuft jedes der Einführlöcher 30 in dem Zapfen 3 senkrecht zu der Anschlussfläche 10 und senkrecht zu der Stirnfläche 11. Die Anschlussfläche 10 und die Stirnfläche 11 sind parallel zueinander angeordnet. Dies führt zu einem kompakten Design und zur Verwendbarkeit von kurzen Schrauben 14 zum Einführen in die Einführlöcher 30 zum Ausbilden der lösbaren Verbindung 15.

Jedes der Einführlöcher 30 des Zapfens 3 weist eine kegelstumpfförmige (oder alternativ kreiszylindrische, nicht gezeigt) Aufnahme 48 für einen Schraubenkopf auf. Für die in Figur 2 dargestellte Geometrie kann eine Senkkopfschraube mit kegelstumpfförmigem Schraubenkopf eingesetzt werden und ohne Überstand im Zapfen 3 versenkt werden. In anderen Ausführungsformen kann mit einer kreiszylindrischen Aufnahme eine Senkkopfschraube mit kreiszylindrischem Schraubenkopf ohne Überstand im Zapfen 3 versenkt werden.

Bei der Ausführungsform gemäß Figur 2 dienen horizontale Flächen auf gegenüberliegenden Seiten des Zapfens 3 zur besonders effizienten Kraftübertragung senkrechter Kräfte. Als Anschlusszapfenabschnitte sind zwei Erhebungen 12 zum formschlüssigen Eingriff in eine entsprechende Vertiefung 13 am nicht gezeigten ersten Holzbauteil 1 vorgesehen. Diese Konfiguration des Zapfens 3 in Kombination mit der korrespondierenden Konfiguration des ersten Holzbauteils 1 stellt eine Positionierungshilfe zur Montage des Zapfens 3 am ersten Holzbauteil 1 bereit.

Die obere bzw. hintere Endfläche 8 des Zapfens 3 stellt eine obere Abschlussfläche dar, die nach dem Setzen des Verbinderzapfens 3 in der Schwalbenschwanztasche (entsprechend dem Haltebereich 6) des zweiten Holzbauteils 2 zur Einführungstasche (entsprechend dem Einführungsbereich 5) ausgerichtet ist. Damit erfüllt die hintere Endfläche 8 die Funktion einer Abschlussfläche des Verbinders.

Die Anschlussfläche 10 des Zapfens 3 ist jene Innenfläche des Zapfens 3, die im montierten Zustand die dem ersten Holzbauteil 1 zugewandte innere Anschlussfläche bildet. Diese erfüllt die Funktion einer eben aufliegenden Anschlussfläche des Verbinderzapfens 3 zum ersten Holzbauteil 1.

Die Stirnfläche 11 des Zapfens 3 bildet eine Außenfläche des Verbinderzapfens 3, die im Klemmbereich der Schwalbenschwanztasche zum zweiten Holzbauteil 2 zeigt. Diese hat die Funktion einer äußeren Abschlussfläche.

Die Einführlöcher 30 des Zapfens 3 sind als Durchgangslöcher (insbesondere Durchgangsbohrungen) ausgeführt und können alternativ auch als Sackloch ausgebildet sein, das von einer Schraube 14 oder einem anderen Befestigungselement durchstoßen werden kann. Die Einführlöcher 30 bilden eine Führungsbohrung durch den Verbinderzapfen 3. Vorzugsweise entspricht die Durchmesserbohrung dem Schraubendurchmesser. Die Einführlöcher 30 dienen zur leichten und exakten Befestigung der zur Montage anzubringenden Schrauben 14, vorzugsweise Holzschrauben.

In den Einführlöchern 30 kann eine Senkbohrung vorgesehen sein. Diese kann insbesondere eine 90° Senkung der Sack- bzw. Durchgangsbohrung bilden. Dies ermöglicht einen planen Abschluss des Schraubenkopfes mit der Außenfläche des Verbinderzapfens.

Die Dicke "d" der Erhebung 12 wird auch als Anschlusszapfenhöhe beim Verbinderzapfen bezeichnet. Zum Beispiel kann die Dicke "d" der Erhebung 12 in einem Bereich von 0.5 mm bis 1 cm liegen, insbesondere in einem Bereich von 1 mm bis 5 mm. Sie korrespondiert zu der Anschlusszapfentiefe bei der Bohrung im ersten Holzbauteil 1, d.h. zu der Tiefe der Vertiefung 13. Vorzugsweise ist die Anschlusszapfenhöhe bzw. die Höhe des Anschlusszapfens zur Gewährleistung eines planen Anschlusses der Innenfläche des Verbinderzapfens 3 an das erste Holzbauteil 1 kleiner als die Anschlusszapfentiefe im Bohrloch des ersten Holzbauteils 1. Dies dient der Definition der kraftübertragenden Fläche des Anschlusszapfens und der Verringerung der Kippgefahr bei einer Momentübertragung.

Die Dicke "D" des Zapfens 3 ohne die Dicke "d" der Erhebung 12 wird auch als Verbinderzapfenstärke bezeichnet und gibt die Stärke des Verbinderzapfens 3 an. Die Einstellung besagter Dicke des Zapfens 3 dient der Definition der kraftübertragenden Einfädelungsfläche des Verbinderzapfens. Sie entspricht der Erhöhung der Seitenfläche bzw. der Verankerungstiefe im anzuschließenden zweiten Holzbauteil 2.

Der in Figur 2 angegebene Flankenwinkel α der vorderen Endfläche 7 des Zapfens 3 kann beispielsweise zwischen 5° und 45° betragen, insbesondere zwischen 10° und 30°. Dieser Flankenwinkel α stellt eine Vorgabe der Neigung der Seitenfläche und der Einfädelungsfläche dar. Dies beeinflusst die Festigkeit der Schwalbenschwanzfrästasche und bildet eine Grundlage für den Effekt des Zusammenziehens zwischen dem ersten Holzbauteil 1 und dem zweiten Holzbauteil 2 während des Setzvorganges.

Der ebenfalls in Figur 2 gezeigte Konuswinkel γ von der Seitenfläche des Zapfens 3 entspricht einer seitlichen Neigungsvorgabe des Verbinderzapfens 3. Der Konuswinkel γ erfüllt die Funktion einer zentrierenden klemmenden Wirkung beim Einfädeln des Verbinderzapfens 3.

Der in Figur 2 dargestellte Zapfen 3 ist als keilförmiger Verbinderzapfen mit runder Einfädelungsfläche ausgebildet. Durch den Konuswinkel der Seitenfläche ist ein konisch zulaufender Grundkörper des Verbinderzapfens mit runder Einfädelungs- und Endfläche für eine leichtere Zentrierung im Klemmbereich vorgegeben.

Darüber hinaus ist in Figur 2 die Einfädelungsfläche rund ausgebildet, d.h. die vordere Endfläche 7 ist abgerundet. Mit anderen Worten ist der untere Bereich oder die Endfläche 7 des Verbinderzapfens 3 zur Einführung des Verbinderzapfens 3 in den Klemmbereich der Schwalbenschwanztasche ausgebildet und zur leichteren Einfädelung gerundet. Dies erfüllt die Funktion einer zentrierenden Einführung des Verbinderzapfens 3. Bei der beschriebenen Konfiguration ist eine Kraftübertragungsfläche bei der Übertragung abhebender vertikaler Kräfte von dem zweiten Holzbauteil 2 zu dem ersten Holzbauteil 1 gebildet.

**Figur 3** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht.

Der Zapfen 3 gemäß Figur 3 unterscheidet sich von dem Zapfen 3 gemäß Figur 2 insbesondere dadurch, dass gemäß Figur 3 die zwei Erhebungen 12 auf der Anschlussfläche 10 gleich große Flächen und gleiche geometrische Formen aufweisen, nämlich Kreise gleichen Durchmessers. Dies erlaubt es, den Zapfen 3 in einer ersten Orientierung und in einer um 180° gedrehten Orientierung an einem in Figur 2 nicht gezeigten ersten Holzbauteil 1 zu montieren. Die kreisförmigen Erhebungen 12 gemäß Figur 2 erhöhen die Kontaktfläche und erlauben daher eine besonders gute Kraftübertragung.

**Figur 4** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht.

Der Zapfen 3 gemäß Figur 4 unterscheidet sich von dem Zapfen 3 gemäß Figur 3 insbesondere dadurch, dass gemäß Figur 4 nur eine einzige Erhebung 12 an der Anschlussfläche 10 ausgebildet ist, die langgestreckt mit zwei halbkreisförmigen Enden ist. Die Länge "L" der Erhebung 12 gemäß Figur 4 kann in Einführrichtung des Zapfens 3 in die Tasche oder Nut 4 des zweiten Holzbauteils 2 mindestens das Doppelte, insbesondere mindestens das Dreifache, von ihrer Breite "B" quer zur Einführrichtung sein. Diese langgestreckte Formgebung der Erhebung 12 stabilisiert den Zapfen 3 bei seiner Anbringung am ersten Holzbauteil 1.

**Figur 5** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht.

Der Zapfen 3 gemäß Figur 5 unterscheidet sich von dem Zapfen 3 gemäß Figur 4 insbesondere dadurch, dass gemäß Figur 5 die einzige Erhebung 12 an der Anschlussfläche 10 langgestreckt rechteckig mit abgerundeten Ecken ist. Dies erhöht gegenüber Figur 4 weiter die Fläche und Masse der Erhebung 12 und bietet weiter erhöhte Stabilität der Befestigung des Zapfens 3 am ersten Holzbauteil 1.

**Figur 6** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Seitenansicht. Gemäß Figur 6 sind Befestigungslöcher für Schrauben und Bohrungen für eine Stiftverbindung zur Kraftübertragung vorgesehen.

Der Zapfen 3 gemäß Figur 6 unterscheidet sich von dem Zapfen 3 gemäß Figur 2 insbesondere dadurch, dass gemäß Figur 6 als Einführlöcher 30 zwei senkkopfschraubenkomplementäre Einführlöcher 30' und zusätzlich zwei zylinderstiftkomplementäre Einführlöcher 30"vorgesehen sind. Die senkkopfschraubenkomplementären Einführlöcher 30' sind jeweils zum Aufnehmen einer Senkkopfschraube (nicht gezeigt) ausgebildet, die sich bis in das erste Holzbauteil 1 hinein erstreckt und somit für eine Befestigung des Zapfens 3 am ersten Holzbauteil 1 sorgt. Darüber hinaus sind die zylinderstiftkomplementären Einführlöcher 30" jeweils zum Aufnehmen eines zylindrischen Stifts (nicht gezeigt) ausgebildet, der sich ebenfalls bis in das erste Holzbauteil 1 hinein erstrecken kann. Allgemeiner können als zylinderstiftkomplementäre Einführlöcher 30" runde oder eckige Durchgangöffnungen zum Durchstecken eines vorzugsweise metallischen Verbindungsmittels eingesetzt werden. Somit sind gemäß Figur 6 Durchsteckbohrungen vorgesehen, die sowohl eine Schraub- als auch eine Stiftverbindung von Zapfen 3 und erstem Holzbauteil 1 unterstützen. Die Konfiguration gemäß Figur 6 bewirkt vorteilhaft eine Erhöhung der Schertagfähigkeit zwischen dem Verbinderzapfen 3 und dem ersten Holzbauteil 1.

In Figur 6 ist keine Erhebung 12 vorgesehen, allerdings kann mindestens eine Erhebung 12 alternativ ebenfalls ausgebildet sein. In entsprechender Weise kann bei jeder der dargestellten Ausführungsformen die mindestens eine Erhebung 12 auch weggelassen werden und daher die Anschlussfläche 10 vollständig eben ausgebildet sein.

**Figur 7** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht (oben) und einer Seitenansicht (unten). Ein besonderes Merkmal der Ausführungsform gemäß Figur 7 ist die Zweiteilung des Zapfens 3. Somit kann ein Zapfen 3 auch aus zwei oder mehr Teilen bzw. Geometrien geformt werden.

Gemäß Figur 7 hat in der Draufsicht der Zapfen 3 einen rechteckigen Umriss. In der Seitenansicht hat der Zapfen 3 eine Trapezform.

Der Zapfen 3 gemäß Figur 7 ist als gefügter, zweigeteilter Verbinderzapfen ausgebildet. Genauer gesagt kann der zweiteilige Zapfen 3 aus zwei vorzugsweise identischen Halbteilen zusammengesetzt werden. Das Vorsehen eines zweiteiligen Verbinders kann das Herstellungsverfahren vereinfachen oder flexibilisieren. Insbesondere kann das Bereitstellen eines zweiteiligen Verbinderzapfens zur getrennten Montage und Fügung während eines Montageprozesses erfolgen.

Darüber hinaus sind gemäß Figur 7 die geneigten Seitenflächen 9 zueinander parallel angeordnet.

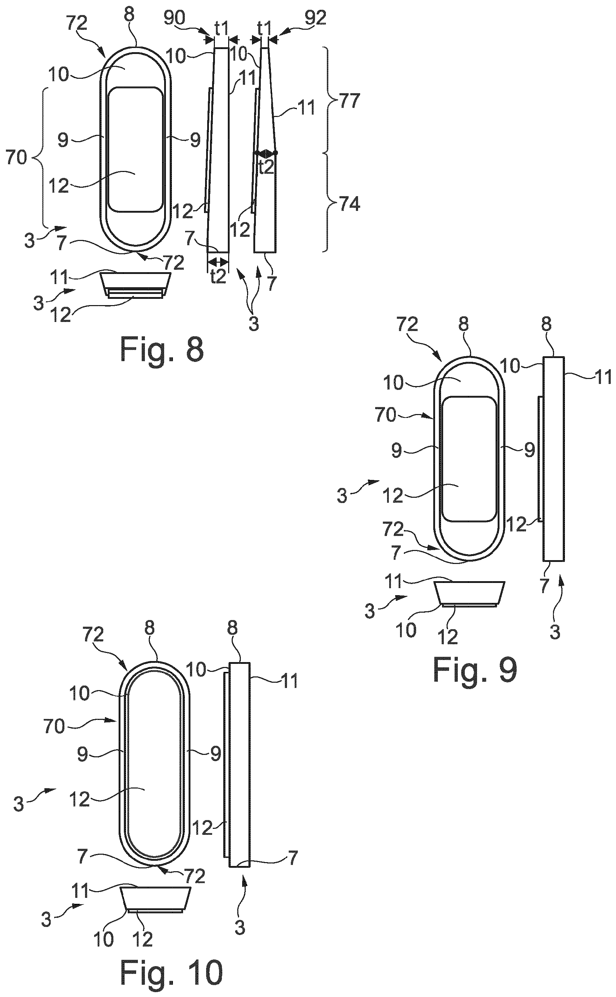

**Figur 8** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und in Seitenansichten. Ein vorteilhafter Aspekt dieser Ausführungsform liegt in der zulaufenden Verjüngung des Verbinders in der Seitenansicht. Diese bewirkt ein Zusammenziehen der Elemente.

Die Anordnung gemäß Figur 8 zeigt in der Draufsicht den Zapfen 3 mit einem rechteckigen Zentralabschnitt 70 und zwei abgerundeten, hier halbkreisförmigen, Endabschnitten 72, die sich unmittelbar an den rechteckigen Zentralabschnitt 70 anschließen. Somit sind gemäß Figur 8 die vordere Endfläche 7 und die hintere Endfläche 8 identisch ausgebildet. Aufgrund des rechteckigen Zentralabschnitts 70 verjüngt sich der Zapfen 3 gemäß Figur 8 auch nicht in Einführrichtung in die Tasche oder Nut 4 des zweiten Holzbauteils 2.

Wie in einer Seitenansicht 90 gezeigt, kann der Zapfen 3 zwischen der Anschlussfläche 10 und der Stirnfläche 11 einen konischen Umriss haben. Zwischen der Anschlussfläche 10 und der Stirnfläche 11 kann der Zapfen von der vorderen Endfläche 7 zur hinteren Endfläche 8 konisch zulaufen.

Wie in einer Seitenansicht 92 gezeigt, kann der Zapfen 3 alternativ zwischen der Anschlussfläche 10 und der Stirnfläche 11 einen ersten konischen Abschnitt 74 und einen sich daran anschließenden und gegenüber dem ersten konischen Abschnitt 74 abknickenden zweiten konischen Abschnitt 77 haben. Zwischen der Anschlussfläche 10 und der Stirnfläche 11 kann der Zapfen von der vorderen Endfläche 7 zur hinteren Endfläche 8 mit zwei Konuswinkeln in zwei Abschnitten zulaufen.

Bei dem in Figur 8 dargestellten konisch verjüngten Verbinderzapfen 3 kann sich über einen Teilbereich oder über den gesamten Bereich die Stärke t1 bzw. t2 des Verbinderzapfens 3 verändern, wobei gemäß Figur 8 gilt: t1 < t2.

Ein solcher konisch verjüngter Verbinderzapfen 3 erfüllt die Funktion eines spaltfreien Heranziehens der Holzbauteile 1 und 2 während des Einfädelns des Verbinderzapfens 3 in den Klemmbereich der Schwalbenschwanztasche.

Der in Figur 8 dargestellte keilförmige Verbinderzapfen 3 mit runder Einfädelungsfläche hat einen durch den oder die Konuswinkel der Seitenfläche vorgegebenen konisch zulaufenden Grundkörper mit runder Einfädelungs- und Endfläche für eine leichtere Zentrierung im Klemmbereich. Anschaulich zieht die Keilform die Holzbauteile 1, 2 zueinander.

Ferner sind auch gemäß Figur 8 die geneigten Seitenflächen 9 zueinander parallel angeordnet.

**Figur 9** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und in Seitenansichten. Ein vorteilhafter Aspekt dieser Ausführungsform liegt in dem symmetrischen Aufbau, so dass der Verbinder in beiden Richtungen eingesetzt werden kann. Der viereckige Anschlusszapfen erleichtert die Herstellbarkeit.

Der Zapfen 3 gemäß Figur 9 unterscheidet sich von dem Zapfen 3 gemäß Figur 8 insbesondere dadurch, dass gemäß Figur 9 der Grundkörper des Zapfens 3 nicht konisch zulaufend ausgebildet ist, sondern in einer rechts dargestellten Seitenansicht rechteckig ist.

**Figur 10** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und in Seitenansichten.

Der Zapfen 3 gemäß Figur 10 unterscheidet sich von dem Zapfen 3 gemäß Figur 9 insbesondere dadurch, dass gemäß Figur 10 die Erhebung 12 nicht als Rechteck mit abgerundeten Enden, sondern mit einem rechteckigen Zentralabschnitt mit zwei halbkreisförmigen Enden ausgebildet ist.

Ferner erstreckt sich gemäß Figur 10 die Erhebung 12 fast über die ganze Anschlussfläche 10 hinweg. Insbesondere kann sich die Erhebung 12 über mindestens 90% der Anschlussfläche 10 hinweg erstrecken.

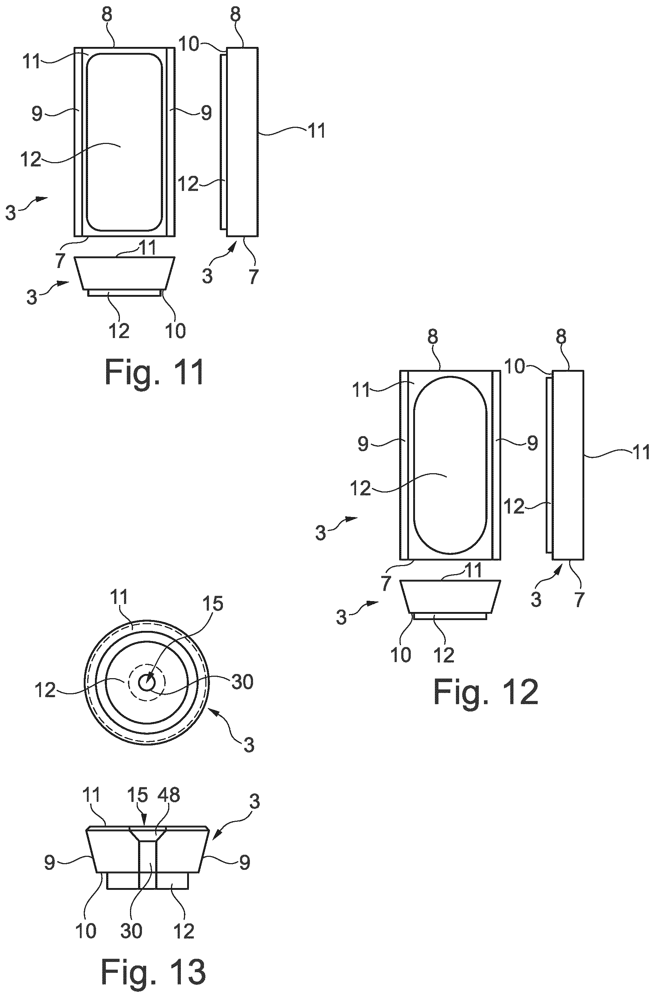

**Figur 11** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und in Seitenansichten. Die stumpfen 90°-Stirnkanten ermöglichen eine vorteilhafte Kraftübertragung.

Der Zapfen 3 gemäß Figur 11 unterscheidet sich von dem Zapfen 3 gemäß Figur 9 insbesondere dadurch, dass gemäß Figur 11 der Zapfen 3 an der vorderen Endfläche 7 und an der hinteren Endfläche 8 nicht abgerundet ist, sondern eine geradlinig verlaufende Längskante aufweist.

**Figur 12** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und in Seitenansichten.

Der Zapfen 3 gemäß Figur 12 unterscheidet sich von dem Zapfen 3 gemäß Figur 11 insbesondere dadurch, dass gemäß Figur 12 die Erhebung 12 nicht rechteckig mit abgerundeten Ecken ist, sondern einen rechteckigen Zentralabschnitt aufweist, an den sich beidseitig ein halbkreisförmiges Ende anschließt.

**Figur 13** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht (oben) und einer Querschnittsansicht (unten).

Der Zapfen 3 gemäß Figur 13 ist kegelstumpfförmig und hat eine kreisrunde Erhebung 12.

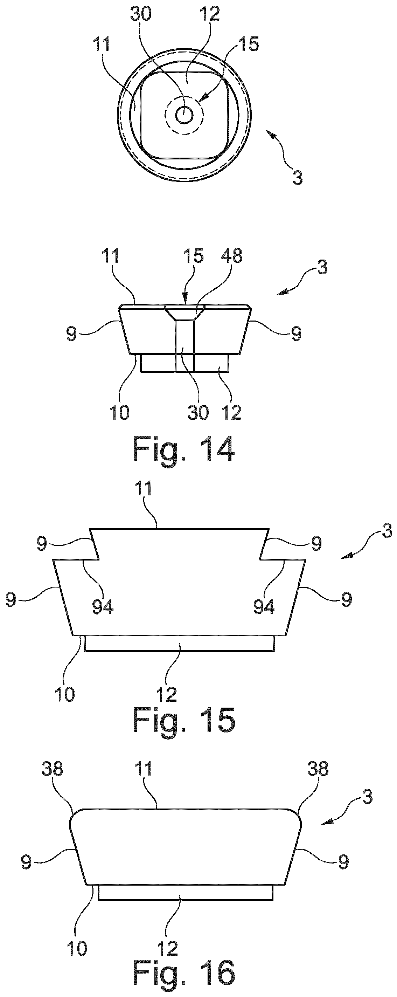

**Figur 14** zeigt eine Anordnung mit Zapfen 3 und lösbarer Verbindung 15 für eine Wand-, Decken-, Fassaden- oder Dachelementverbindung gemäß einem anderen exemplarischen Ausführungsbeispiel der Erfindung in einer Draufsicht und einer Querschnittsansicht. Anschaulich verhindert der viereckige Anschlusszapfen ein Durchdrehen des Verbinders beim Verschrauben.

Der Zapfen 3 gemäß Figur 14 ist kegelstumpfförmig und hat eine rechteckige abgerundete Erhebung 12.

**Figur 15** zeigt einen Zapfen 3 einer Wand-, Decken-, Fassaden- oder Dachelementverbindung gemäß einem anderen exemplarischen Ausführungsbeispiel der Erfindung in einer Querschnittsansicht. Bei der Ausführungsform gemäß Figur 15 ist eine doppelte Verzahnung vorgesehen, welche vorteilhaft eine Erhöhung der Bruchfestigkeit im Bereich der Schrägkante der Nut 4 bewirken kann.

Bei der Ausführungsform gemäß Figur 15 weist der Zapfen 3 zwei übereinander angeordnete und einstückig miteinander verbundene Kegelstumpfabschnitte auf, wobei der obere Kegelstumpfabschnitt eine geringere Höhe und eine geringere Breite als der untere Kegelstumpfabschnitt hat.

Gemäß Figur 15 ist ein Verbinderzapfen 3 mit zwei äußeren geneigten Seitenflächen 9 vorgesehen. Der Verbinderzapfen 3 mit den zwei parallelen Seitenflächen 9 kann so ausgebildet sein, dass die zwei Seitenflächen 9 den gleichen Flankenwinkel oder unterschiedliche Flankenwinkel besitzen. Die beiden Seitenflächen 9 sind durch einen dazwischen angeordneten Horizontalabschnitt 94 räumlich zueinander versetzt.

Dies bewirkt gemäß Figur 15 eine Erhöhung der Schertragfähigkeit der Fräskanten im Klemmbereich der Schwalbenschwanztasche durch eine Materialerhöhung in diesem Bereich.

**Figur 16** zeigt einen Zapfen 3 einer Wand-, Decken-, Fassaden- oder Dachelementverbindung gemäß einem anderen exemplarischen Ausführungsbeispiel der Erfindung in einer Querschnittsansicht. Die Ausführungsform gemäß Figur 16 erlaubt eine Verringerung der Kerbspannung in der Nut 4 aufgrund der abgerundeten inneren Kanten des Zapfens 3.

Gemäß Figur 16 hat der Zapfen 3 in einer Querschnittsansicht zueinander geneigte Seitenflächen 9, die über Rundungen 38 in die Stirnfläche 11 übergehen. Beim Ausbilden der Verbindung unter Verwendung der Rundungen 38 gemäß Figur 16 können unerwünschte exzessive Kerbspannungen vermieden werden.

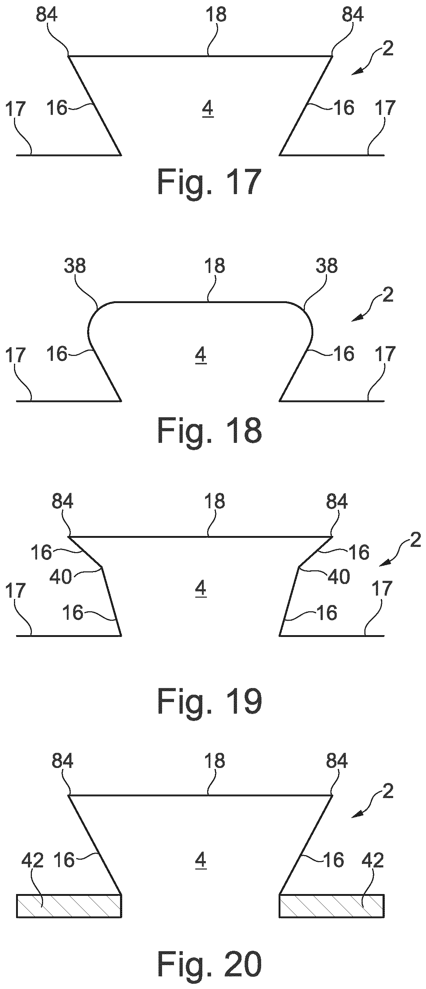

**Figur 17** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem exemplarischen Ausführungsbeispiel der Erfindung in einer Querschnittsansicht. Die Ausführungsform gemäß Figur 17 erlaubt eine sehr hohe Seitenkantenlänge (siehe Bezugszeichen 17), wodurch eine hohe Kraftübertragung erreicht werden kann.

Bei dieser Ausführungsform ist die Tasche oder Nut 4 in einer Querschnittsansicht trapezförmig. Auch der zugehörige, nicht dargestellte Zapfen 3 kann in einer Querschnittsansicht trapezförmig sein. In Kombination mit der trapezförmigen Tasche oder Nut 4 des zweiten Holzbauteils 2 kann dadurch eine formschlüssige Schwalbenschwanzverbindung zwischen den beiden Holzbauteilen 1, 2 vermittels des Zapfens 3 bewerkstelligt werden. Diese Ausführungsform zeichnet sich durch eine hohe Haltekraft aus.

**Figur 18** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Mit der dargestellten Nut 4 für den Zapfen 3 kann eine verringerte Kerbspannung erreicht werden.

Die Ausführungsform gemäß Figur 18 unterscheidet sich von der Ausführungsform gemäß Figur 17 dadurch, dass gemäß Figur 18 die Tasche oder Nut 4 in der Querschnittsansicht zueinander geneigte innere Seitenflächen 16 aufweist, die über innere Rundungen 38 in eine innere Bodenfläche 18 übergehen. Es ist möglich, dass der nicht dargestellte Zapfen 3 in einer Querschnittsansicht in korrespondierende Weise zueinander geneigte äußere Seitenflächen 9 aufweist, die über äußere Rundungen 38 in die äußere Stirnfläche 11 übergehen. Beim Ausbilden der Verbindung unter Verwendung der Rundungen 38 gemäß Figur 18 stellen sich vorteilhafte Eigenschaften in Hinblick auf die Kerbspannung ein.

**Figur 19** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Die dargestellte Nut 4 für den Zapfen 3 weist einen Doppelknick in der Seitenkante auf. Dies erlaubt eine Verringerung der Bruchgefahr im Kantenbereich der Nut 4.

Die Ausführungsform gemäß Figur 19 unterscheidet sich von der Ausführungsform gemäß Figur 17 dadurch, dass gemäß Figur 19 die Tasche oder Nut 4 in der Querschnittsansicht zueinander geneigte und jeweils abknickende innere Seitenflächen 16 aufweist, die über eine jeweilige Kante 84 in eine innere Bodenfläche 18 übergehen. Korrespondierend kann der Zapfen 3 (nicht dargestellt in Figur 19) in einer Querschnittsansicht zueinander geneigte und jeweils abknickende äußere Seitenflächen 9 aufweisen, die über eine Kante 40 in die äußere Stirnfläche 11 übergehen. Mit dieser Ausführungsform ist ein doppelter Formschluss aufgrund der Seitenflächenabschnitte diesseits und jenseits der Kante 40 ermöglicht, was die Zuverlässigkeit der Verbindung zwischen den Holzbauteilen 1, 2 weiter erhöht.

**Figur 20** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Die Ausführungsform gemäß Figur 20 bewirkt eine Verstärkung des Randbereichs der Nut 4 durch das Vorsehen einer zusätzlichen Platte aus festerem Material.

Die Ausführungsform gemäß Figur 20 unterscheidet sich von der Ausführungsform gemäß Figur 17 dadurch, dass gemäß Figur 20 das zweite Holzbauteil 2 anschlussflächenseitig einen Verstärkungskragen 42 aufweist, der beispielsweise aus Metall oder Kunststoff hergestellt sein kann. Der Verstärkungskragen 42 liegt im montierten Zustand vorzugsweise direkt am ersten Holzbauteil 1 an und verstärkt die Verbindung zwischen den Holzbauteilen 1, 2. Insbesondere bei der Verbindung dünner Platten stellt diese Ausführungsform eine weiter erhöhte Festigkeit bereit, wenn beispielsweise der Verstärkungskragen 42 an dem ersten Holzbauteil 1 verklebt und/oder mittels einer Schraubenverbindung befestigt wird.

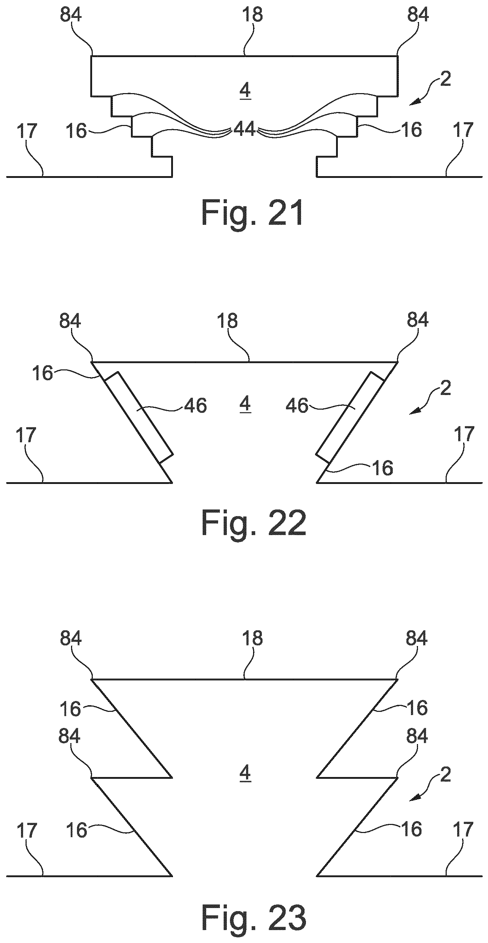

**Figur 21** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht.

Die Ausführungsform gemäß Figur 21 unterscheidet sich von der Ausführungsform gemäß Figur 17 dadurch, dass gemäß Figur 21 die Tasche oder Nut 4 in einer Querschnittsansicht zueinander geneigte und Stufen 44 aufweisende innere Seitenflächen 16 aufweist. Entsprechend kann der Zapfen 3 in einer Querschnittsansicht zueinander geneigte und Stufen 44 aufweisende äußere Seitenflächen 9 aufweisen. Die Stufen 44 können umlaufend sein. Es können im Allgemeinen mindestens zwei, mindestens drei oder mindestens vier Stufen vorgesehen sein. Dadurch kann eine Verzahnung oder eine wellenförmige Verbindung mit besonderer Festigkeit bereitgestellt werden.

**Figur 22** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Die Ausführungsform gemäß Figur 22 involviert eine Verklebung im Seitenkantenbereich, indem Klebstoff in der Nut 4 oder am Zapfen 3 aufgebracht wird.

Die Ausführungsform gemäß Figur 22 unterscheidet sich von der Ausführungsform gemäß Figur 17 dadurch, dass gemäß Figur 22 auf oder in den geneigten inneren Seitenflächen 16 des zweiten Holzbauteils 2 zum Ausbilden der Tasche oder Nut 4 eine Klebstoffstruktur 46 gebildet ist. Die Klebstoffstruktur 46 kann ein Klebstoffdepot bilden, um mittels einer Verklebung die geneigten inneren Seitenflächen 16 zusätzlich an korrespondierenden äußeren Seitenflächen 9 des Zapfens 3 zu fixieren.

**Figur 23** zeigt ein zweites Holzbauteil 2 mit einer Tasche oder Nut 4 für einen Zapfen 3 an einem ersten Holzbauteil 1 (nicht gezeigt) einer Wand-, Decken-, Fassaden- oder Dachelementverbindung gemäß einem anderen exemplarischen Ausführungsbeispiel der Erfindung in einer Querschnittsansicht. Die Ausführungsform gemäß Figur 23 implementiert einen Doppelzapfen zur Tragfähigkeitserhöhung.

Die Ausführungsform gemäß Figur 23 unterscheidet sich von der Ausführungsform gemäß Figur 17 dadurch, dass gemäß Figur 23 die Tasche oder Nut 4 in der Querschnittsansicht doppeltrapezförmig ist. In entsprechender Weise kann der nicht dargestellte zugehörige Zapfen 3 in einer Querschnittsansicht ebenfalls doppeltrapezförmig sein. Die dadurch erzeugte doppelte Schwalbenschwanzverbindung gestaltet die Zuverlässigkeit der Kopplung der beiden Holzbauteile 1, 2 vermittels des Zapfens 3 noch zuverlässiger.

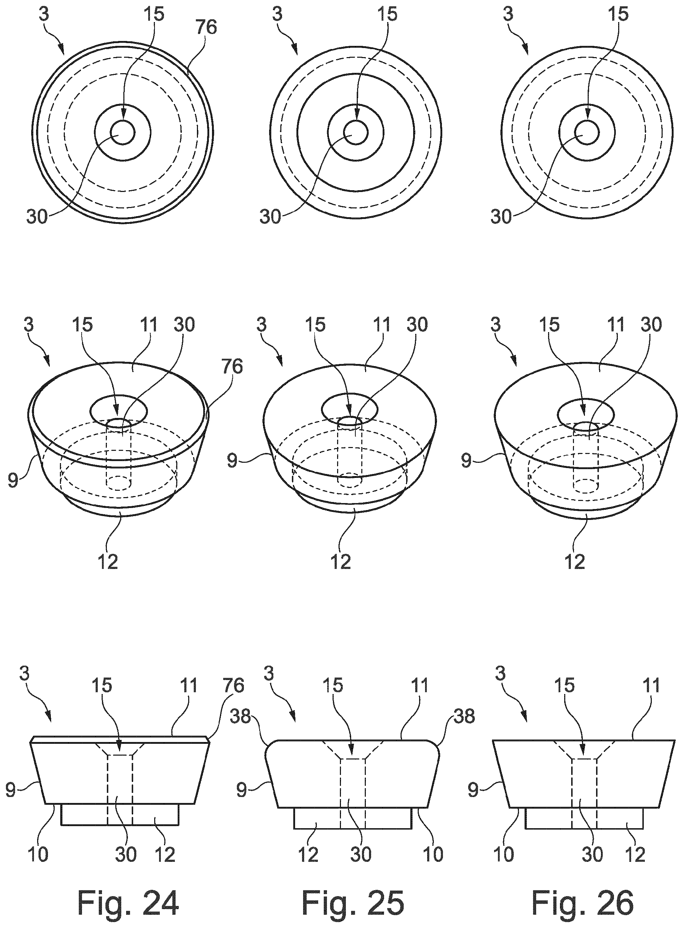

**Figur 24** zeigt einen Zapfen 3 für eine Wand-, Decken-, Fassaden- oder Dachelementverbindung gemäß einem exemplarischen Ausführungsbeispiel der Erfindung in einer Draufsicht (oben), einer dreidimensionalen Ansicht (Mitte) und einer Querschnittsansicht (unten). Die Fase 76 an der oberen Verbinderkante dient auch als Schnittschutz beim Verschrauben des kreisrunden Verbinders, der sich beim Verschrauben mitdrehen kann.

Bei dieser Ausführungsform ist der Zapfen 3 in einer Querschnittsansicht trapezförmig. In Kombination mit einer trapezförmige Tasche oder Nut 4 eines zweiten Holzbauteils 2 kann dadurch eine formschlüssige Schwalbenschwanzverbindung zwischen den beiden Holzbauteilen 1, 2 vermittels des Zapfens 3 bewerkstelligt werden. Diese Ausführungsform zeichnet sich durch eine hohe Haltekraft aus.

Der Zapfen 3 gemäß Figur 24 ist kegelstumpfförmig mit einer sich an die Anschlussfläche 10 anschließenden scheibenförmigen Vertiefung 12. An der Stirnfläche 11 hat der Zapfen 3 eine umlaufende Fase 76, um scharfe Kanten zu vermeiden. Durch den Zapfen 3 erstreckt sich eine einzige Durchgangsbohrung 30 mit einer Formgebung, die zu einer Senkkopfschraube zum Ausbilden einer lösbaren Verbindung 15 mit einem ersten Holzbauteil 1 komplementär ist. Das Einführloch 30 hat einen zylindrischen Abschnitt zum Aufnehmen eines Schraubenschafts sowie einen sich daran anschließenden kegelstumpfförmigen Endabschnitt zum Aufnehmen eines kegelstumpfförmigen Schraubenkopfs. Alternativ kann sich an den zylindrischen Abschnitt zum Aufnehmen eines Schraubenschafts ein radial aufgeweiteter weiterer zylindrischer Abschnitt zum Aufnehmen eines zylindrischen oder scheibenförmigen Schraubenkopfs anschließen (nicht gezeigt). Beispielsweise kann der Zapfen 3 gemäß Figur 24 aus Holz gebildet werden, alternativ aus Kunststoff und/oder Metall.

**Figur 25** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 25 zeigt einen Zapfen 3 für die Nut 4 gemäß Figur 18 und bewirkt eine geringe Kerbspannung.

Die Ausführungsform gemäß Figur 25 unterscheidet sich von der Ausführungsform gemäß Figur 24 dadurch, dass gemäß Figur 25 der Zapfen 3 in einer Querschnittsansicht zueinander geneigte Seitenflächen 9 aufweist, die über Rundungen 38 in die Stirnfläche 11 übergehen. Beim Ausbilden der Verbindung unter Verwendung der Rundungen 38 gemäß Figur 25 stellen sich vorteilhafte Eigenschaften in Hinblick auf die Kerbspannung ein.

Die Ausführungsform gemäß Figur 25 unterscheidet sich von der Ausführungsform gemäß Figur 24 also dadurch, dass gemäß Figur 25 der Zapfen 3 zwischen den geneigten Seitenwänden 9 und der Stirnfläche 11 eine Rundung 38 aufweist. Somit ist gemäß Figur 25 eine gerundete Außenkante des Verbinderzapfens 3 vorgesehen. Die gerundete Kante zwischen den Seitenflächen 9 und der Außen- oder Stirnfläche 11 des Verbinderzapfens 3 erfüllt die Funktion, dass durch Vermeidung von mechanischen Spannungsspitzen im Bereich der Bodenfläche und der Seitenfläche die Ausbildung des Klemmbereiches in dem Schwalbenschwanzverbinder zu einer Tragfähigkeitserhöhung der Verbindung insbesondere bei horizontalen Lasten führt.

**Figur 26** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Insbesondere eignet sich der Zapfen 3 gemäß Figur 26 besonders gut in Kombination mit einer Nut 4 gemäß Figur 17.

Die Ausführungsform gemäß Figur 26 unterscheidet sich von der Ausführungsform gemäß Figur 24 dadurch, dass gemäß Figur 26 keine Fase 76 zwischen der Stirnfläche 11 und den geneigten Seitenflächen 9 vorgesehen ist, sondern eine scharfe Kante.

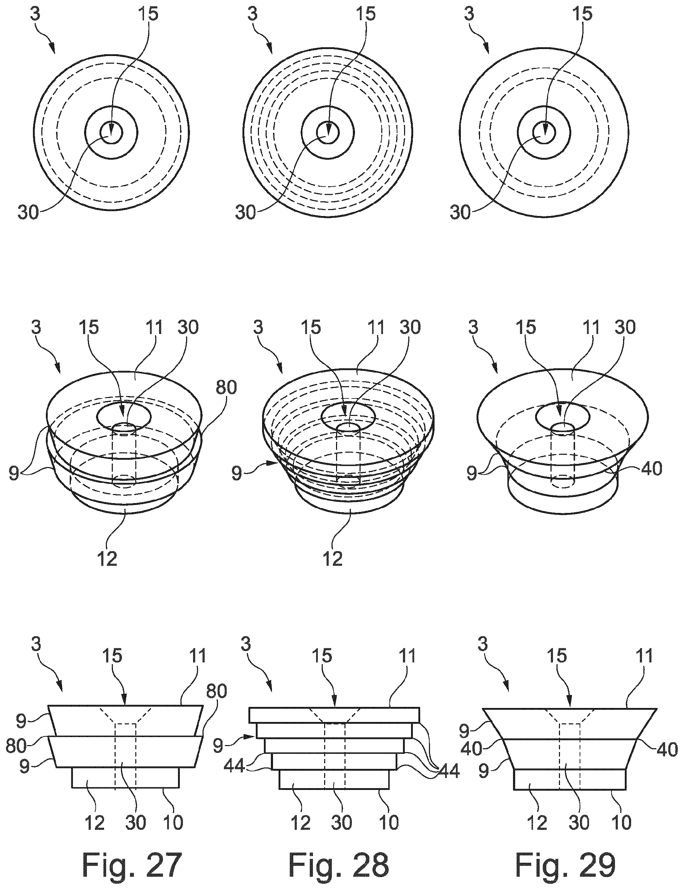

**Figur 27** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Insbesondere eignet sich der Zapfen 3 gemäß Figur 27 besonders gut in Kombination mit einer Nut 4 gemäß Figur 23.

Die Ausführungsform gemäß Figur 27 unterscheidet sich von der Ausführungsform gemäß Figur 26 dadurch, dass gemäß Figur 27 der Zapfen 3 in einer Querschnittsansicht doppeltrapezförmig ist. Die dadurch erzeugte doppelte Schwalbenschwanzverbindung gestaltet die Zuverlässigkeit der Kopplung der beiden Holzbauteile 1, 2 vermittels des Zapfens 3 noch zuverlässiger.

Die Ausführungsform gemäß Figur 27 unterscheidet sich von der Ausführungsform gemäß Figur 26 dadurch, dass gemäß Figur 27 der Zapfen 3 zwei koaxiale, übereinander angeordnete und einstückig miteinander verbundene Kegelstümpfe aufweist, wobei sich an den unteren Kegelstumpf die Erhebung 12 anschließt. Zwischen den beiden Kegelstümpfen ist ein Hinterschnitt 80 gebildet, der die Zuverlässigkeit der Befestigung verbessert. Die Ausführungsform gemäß Figur 27 hat eine Doppelvertiefung bzw. weist einen Doppelzapfen auf.

**Figur 28** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Insbesondere eignet sich der Zapfen 3 gemäß Figur 28 besonders gut in Kombination mit einer Nut 4 gemäß Figur 21 oder gemäß Figur 17.

Die Ausführungsform gemäß Figur 28 unterscheidet sich von der Ausführungsform gemäß Figur 26 dadurch, dass gemäß Figur 28 der Zapfen 3 in einer Querschnittsansicht zueinander geneigte und Stufen 44 aufweisende Seitenflächen 9 aufweist. Anschaulich weist der Zapfen 3 gemäß Figur 28 eine mehrfach abgestufte Kegelstumpfform auf. Die Stufen 44 können umlaufend ausgebildet sein. Es können im Allgemeinen mindestens zwei, mindestens drei oder mindestens vier Stufen vorgesehen sein. Dadurch kann eine Verzahnung oder eine wellenförmige Verbindung mit besonderer Festigkeit bereitgestellt werden.

Die Ausführungsform gemäß Figur 28 unterscheidet sich von der Ausführungsform gemäß Figur 26 somit dadurch, dass gemäß Figur 28 zwischen einer Mehrzahl von Zylinderabschnitten des Zapfens 3 mit unterschiedlichen Außenradien mehrere Stufen 44 gebildet sind, an welcher die Außenfläche des Zapfens 3 von der Stirnfläche 11 her in Richtung der Anschlussfläche 10 nach innen abgestuft ist. Somit ist gemäß Figur 28 eine stufenförmige Seitenfläche 9 des Verbinderzapfens 3 gebildet. Dies bewirkt eine Erhöhung der Zugtragfähigkeit zwischen den Holzbauteilen 1 und 2 durch Versetzung der zu übertragenden Kräfte. Die Ausführungsform gemäß Figur 28 hat mehrere Holzstufen.

**Figur 29** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Insbesondere eignet sich der Zapfen 3 gemäß Figur 29 besonders gut in Kombination mit einer Nut 4 gemäß Figur 19.

Die Ausführungsform gemäß Figur 29 unterscheidet sich von der Ausführungsform gemäß Figur 26 dadurch, dass gemäß Figur 29 der Zapfen 3 in einer Querschnittsansicht zueinander geneigte und jeweils abknickende Seitenflächen 9 aufweist, deren zueinander geneigte Seitenflächenabschnitte über eine Kante 40 ineinander übergehen. Mit dieser Ausführungsform ist ein doppelter Formschluss aufgrund der Seitenflächenabschnitte diesseits und jenseits der Kante 40 ermöglicht, was die Zuverlässigkeit der Verbindung zwischen den Holzbauteilen 1, 2 weiter erhöht.

Die Ausführungsform gemäß Figur 29 unterscheidet sich von der Ausführungsform gemäß Figur 26 also dadurch, dass gemäß Figur 29 zwischen zwei Kegelstumpfabschnitten des Zapfens 3 eine Kante 40 gebildet ist, an welcher die Außenfläche des Zapfens 3 von der Stirnfläche 11 her in Richtung der Anschlussfläche 10 abnickt. Die abgeknickte Seitenfläche des Verbinderzapfens 3 führt zu einer durchgängigen Seitenfläche 9 mit zwei unterschiedlichen Flankenwinkeln. Die Funktion dieser Maßnahme ist in einer Erhöhung der Materialstärke in der Seitenfläche des Klemmbereiches in der Schwalbenschwanztasche zu sehen. Infolgedessen können höhere Gesamtzugtragfähigkeiten zwischen den beiden Holzbauteilen 1, 2 ermöglicht werden. Die Ausführungsform gemäß Figur 29 hat geknickte Kanten.

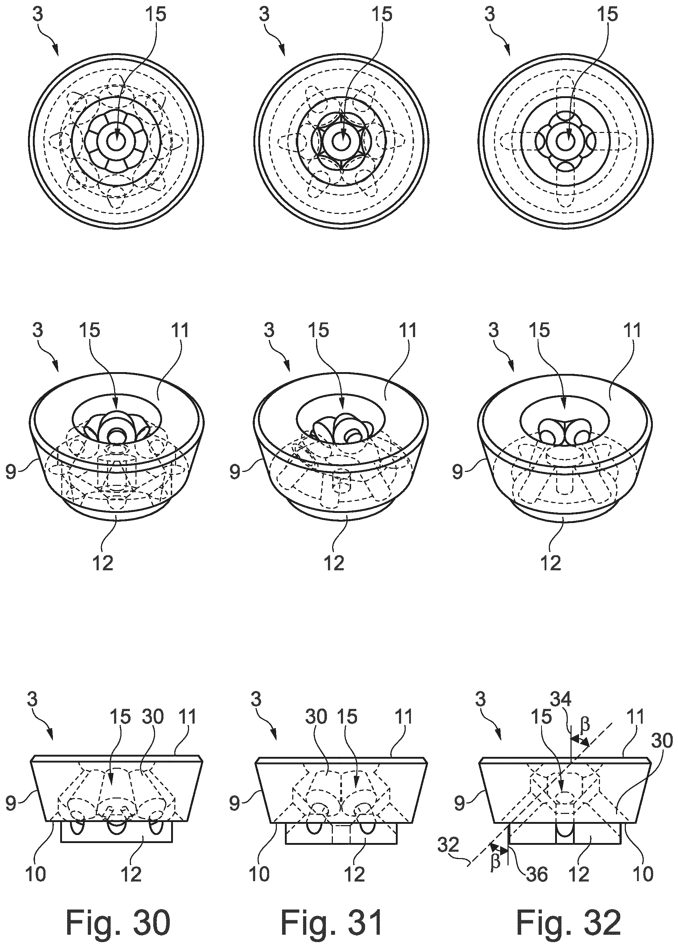

**Figur 30** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 30 zeigt einen Verbinderzapfen mit neunfacher Verschraubung. Dies vermeidet vorteilhaft eine faserparallele Verschraubung.

Die Ausführungsform gemäß Figur 30 unterscheidet sich von der Ausführungsform gemäß Figur 24 dadurch, dass gemäß Figur 30 eine Mehrzahl von Einführlöchern 30 durch den Zapfen 3 vorgesehen sind, die relativ zueinander unterschiedliche Erstreckungsrichtungen aufweisen und daher miteinander jeweils einen von 0° und von 90° verschiedenen Winkel einschließen. Insbesondere können mindestens zwei, vorzugsweise mindestens drei Einführlöcher 30, vorgesehen sein, wobei jedes Paar von zwei Einführlöchern 30 zueinander schräge Erstreckungsrichtungen aufweist. Ein Winkel zwischen Erstreckungsrichtungen von zwei Einführlöchern 30 kann für jedes Paar von zwei Einführlöchern 30 in einem Bereich von 10° bis 80° liegen, insbesondere in einem Bereich von 20° bis 70° oder von 30° bis 60°. In jedes Einführloch 30 kann ein Befestigungselement, wie beispielsweise eine Schraube, ein Nagel oder ein Stift, durchgeführt werden, um die Befestigung des Zapfens 3 an einem ersten Holzbauteil 1 zu bewerkstelligen. Die Gefahr eines unerwünschten Ausziehens des Zapfens 3 aus dem ersten Holzbauteil 1 kann durch mehrere Befestigungselemente in mehreren zueinander schräg orientierten Durchganglöchern 30 signifikant reduziert werden. Die Ausführungsform gemäß Figur 30 hat mehrere zueinander geneigte Befestigungsschrauben, was die Zugkraft erhöht.

Beispielsweise können die relativ zueinander schräg gestellten Schrauben oder sonstigen Befestigungselemente und in entsprechender Weise die Einführlöcher 30 selbst kreisförmig angeordnet sein, wie in Figur 30 dargestellt.

Bei dem Ausführungsbeispiel gemäß Figur 30 kann der Zapfen 3 beispielsweise auf Basis einer Kunstharzplatte gefertigt werden.

**Figur 31** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 31 zeigt einen Verbinderzapfen mit siebenfacher Verbindung (sechsfache Schrägverschraubung und mittige 90°-Fixierschraube). Dies vermeidet vorteilhaft eine faserparallele Verschraubung.

Die Ausführungsform gemäß Figur 31 unterscheidet sich von der Ausführungsform gemäß Figur 30 dadurch, dass gemäß Figur 31 die relativ zueinander schräg orientierten Einführlöcher 30 in anderer Weise als gemäß Figur 30 angeordnet sind. Gemäß Figur 31 ist eine Innen-Mehrfachverschraubung aus kreisförmig angeordneten Einführlöchern 30 und zugehörigen Befestigungselementen realisiert.

Die kreisförmige Anordnung der Schraubkanäle und Schrauben gemäß Figur 31 hat die Funktion der Erhöhung der Zugschertragfähigkeit zwischen Verbinderzapfen und Einschraubuntergrund.

**Figur 32** zeigt einen Zapfen 3 für eine Wand-, Decken-, Fassaden- oder Dachelementverbindung gemäß einem anderen exemplarischen Ausführungsbeispiel der Erfindung in einer Draufsicht, einer dreidimensionalen Ansicht und einer Querschnittsansicht. Figur 32 zeigt einen Verbinderzapfen mit fünffacher Verbindung (vierfache Schrägverschraubung und mittige 90°-Fixierschraube, die auch erreicht werden kann, wenn die Schrägschrauben schon gesetzt sind). Dies vermeidet vorteilhaft eine faserparallele Verschraubung.

Die Ausführungsform gemäß Figur 32 unterscheidet sich von den Ausführungsformen gemäß Figuren 30 und 31 dadurch, dass gemäß Figur 32 die relativ zueinander schräg orientierten Einführlöcher 30 in anderer Weise als gemäß Figuren 22, 23 angeordnet sind. Gemäß Figur 32 ist eine mittig angeordnete Fixierschaube vorgesehen. Es erfolgt eine zentrale Setzung der Schraube in einem Winkel von 90°. Figur 32 erfüllt die Funktion einer Erstfixierung des Verbinderzapfens 3. weitere Schraubenverbindungen können folgen.

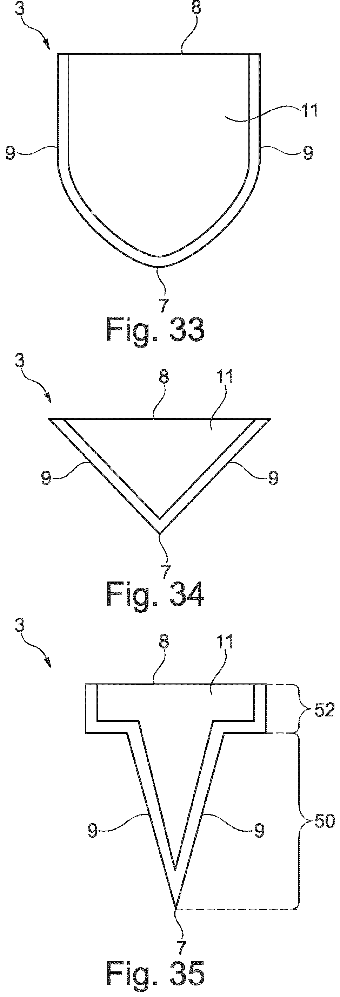

**Figur 33** zeigt einen Zapfen 3 für eine Wand-, Decken-, Fassaden- oder Dachelementverbindung gemäß einem anderen exemplarischen Ausführungsbeispiel der Erfindung in einer Draufsicht. Figur 33 zeigt einen Verbinderzapfen mit schildförmiger Geometrie. Mit diesem kann eine Spitze zur Zentrierung mit sehr langen Seitenkanten kombiniert werden.

Die Ausführungsform gemäß Figur 33 unterscheidet sich von der Ausführungsform gemäß Figur 2 insbesondere dadurch, dass gemäß Figur 33 der Zapfen 3 in einer Draufsicht schildförmig ist. Somit laufen gemäß Figur 33 die geneigten Seitenflächen 9, 9 in gekrümmter Weise aufeinander zu und vereinigen sich an einer spitzen Kante an der vorderen Endfläche 7.

**Figur 34** zeigt einen Zapfen 3 für eine Wand-, Decken-, Fassaden- oder Dachelementverbindung gemäß einem anderen exemplarischen Ausführungsbeispiel der Erfindung in einer Draufsicht. Die Dreiecksform gemäß Figur 34 stellt eine Zentrierform mit einer sehr geringen Zapfenhöhe bereit, da vorderseitig ein stumpfer Winkel vorgesehen ist.

Die Ausführungsform gemäß Figur 34 unterscheidet sich von der Ausführungsform gemäß Figur 33 insbesondere dadurch, dass gemäß Figur 34 der Zapfen 3 in einer Draufsicht dreieckig ist. Somit laufen gemäß Figur 34 die geneigten Seitenflächen 9 geradlinig aufeinander zu und treffen sich an einer spitzen Kante an der vorderen Endfläche 7. Somit ist gemäß Figur 34 ein dreieckiger Verbinderzapfen 3 gebildet. Ein solcher Verbinderzapfen 3 mit dreieckiger zentrierender Einfädelungsfläche erfüllt die Funktion, dass aufgrund der spitzen Einfädelungsfläche eine kleinere Einfädelungstasche im zweiten Holzbauteil 2 ausreichend ist.

**Figur 35** zeigt einen Zapfen 3 für eine Wand-, Decken-, Fassaden- oder Dachelementverbindung gemäß einem anderen exemplarischen Ausführungsbeispiel der Erfindung in einer Draufsicht. Figur 35 zeigt einen im Wesentlichen T-förmigen Verbinderzapfen. Bei diesem sorgt eine lange Spitze für eine langsame Zentrierung. Horizontale Flächen bewirken einen Zusammenzieheffekt und eine vertikale Kraftübertragung. Eine vertikale kurze Fläche fungiert zur Verringerung der Verdrehung.

Die Ausführungsform gemäß Figur 35 unterscheidet sich von der Ausführungsform gemäß Figur 34 insbesondere dadurch, dass gemäß Figur 35 der Zapfen 3 in einer Draufsicht einen dreieckigen Abschnitt 50 (beispielsweise ähnlich wie in Figur 34) und zusätzlich einen sich daran anschließenden rückseitigen aufgeweiteten, zum Beispiel rechteckigen Abschnitt 52 aufweist. Anschaulich kann gemäß Figur 35 ein im Wesentlichen T-förmiger Verbinderzapfen 3 mit Zentrierspitze bereitgestellt werden. Ein solcher Verbinderzapfen 3 mit horizontalen Kontaktflächen und zentrierender Einfädelungsfläche erfüllt die Funktion einer Kraftübertragung durch horizontale Kontaktflächen und spitzer Einfädelungsfläche zum Erzielen einer hohen Kraftübertragung und einer kleinen Einfädelungstasche im zweiten Holzbauteil 2. Die Ausführungsform gemäß Figur 35 zeigt einen schmalen und langen dreieckigen Abschnitt 50, an den ein flächenvergrößernder Abschnitt 52 angeschlossen ist.

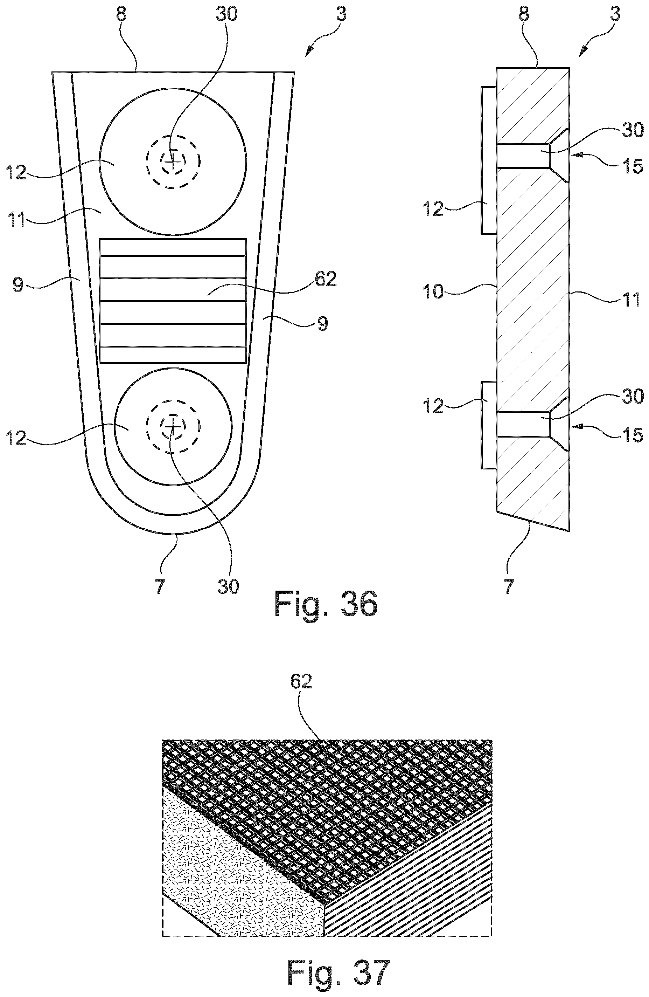

**Figur 36** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Draufsicht und einer Seitenansicht, wobei der Zapfen 3 eine Reibungserhöhungsstruktur 62 aufweist.

**Figur 37** zeigt ein Beispiel für eine solche Reibungserhöhungsstruktur 62 für den Zapfen 3 gemäß einem exemplarischen Ausführungsbeispiel der Erfindung. Figur 36 zeigt einen Verbinderzapfen mit innen liegender Reibungsfläche (vergleiche auch Figur 37) und lösbarer Verbindung. Beispielsweise kann die Reibfläche (d.h. die unten beschriebene Reibungserhöhungsstruktur 62) eingefräst sein oder durch einen Zusatz (beispielsweise eine Metallplatte) aufgetragen sein.

Die Ausführungsform gemäß Figur 36 und Figur 37 unterscheidet sich von der Ausführungsform gemäß Figur 2 insbesondere dadurch, dass gemäß Figur 36 der Zapfen 3 an der Anschlussfläche 10 und/oder an der Stirnfläche 11 die besagte Reibungserhöhungsstruktur 62 aufweist. Die Reibungserhöhungsstruktur 62 kann eine physische Struktur sein, die einen lokal erhöhten Reibungskoeffizienten im Vergleich zu ihrer Umgebung aufweist. Zum Beispiel kann die Reibungserhöhungsstruktur 62 eine Reibplatte sein. Dadurch liegt der Zapfen 3 mit einer höheren Haftreibung an dem ersten Holzbauteil 1 und/oder an dem zweiten Holzbauteil 2 an. Die durch die Reibungserhöhungsstruktur 62 vergrößerte Haftreibung zwischen dem Zapfen 3, dem ersten Holzbauteil 1 bzw. dem zweiten Holzbauteil 2 kann eine unerwünschte Verschiebung besagter Konstituenten relativ zueinander erschweren. Eine relative Verschiebung zueinander erfolgt somit erst bei - im Vergleich zu einer Holzverbindung ohne Reibungserhöhungsstruktur 62 - erhöhten Traglasten. Durch die Reibplatte oder eine andere Reibungserhöhungsstruktur 62 kann die Rauigkeit der jeweiligen Anschlusspaarflächen erhöht werden.

Durch das Vorsehen mindestens einer Reibungserhöhungsstruktur 62 am Zapfen 3 kann mittels Reibung die Schertragfähigkeit erhöht werden. Eine solche Reibungserhöhungsstruktur 62 kann erhalten werden, wenn an der Verbinderseite plan abgefräst wird. Beispielsweise kann die Innenfläche statt plan auch mit einer Pyramidenstruktur oder einer horizontalen Dreiecksline ausgestaltet werden.

**Figur 38** zeigt einen Zapfen 3 und eine lösbare Verbindung 15 an einem ersten Holzbauteil 1 gemäß einem exemplarischen Ausführungsbeispiel der Erfindung mit Einführlöchern 30 durch den Zapfen 3, die sich entlang unterschiedlicher Richtungen 98, 99 erstrecken. Bei der Ausführungsform gemäß Figur 38 verläuft eine erste Richtung 98 eines ersten Einführlochs 30 senkrecht durch den Zapfen 3. Ferner verläuft eine zweite Richtung 99 eines zweiten Einführlochs 30 schräg durch den Zapfen 3. Außerdem zeigt Figur 38 schematisch eine Faserrichtung 97 von Fasern des Holzes des ersten Holzbauteils 1.

Hintergrund ist, dass bei einer 90°-Verschraubung zur Verbinderoberfläche der Fall vorliegen kann, dass es bei einem Anschluss (beispielsweise einem Balkenanschluss oder einem CLT- (Cross Laminated Timber) oder Brettsperrholzanschluss) zu einer Verschraubung in Faserrichtung kommt. In einem solchen Fall reduziert sich Ausziehtragfähigkeit der Schraube erheblich, zum Beispiel bis auf 10% im Vergleich zu einer Verschraubung im Winkel 90° zur Faserrichtung des Holzes. Die zueinander und/oder zu einer Anschlussfläche 10 schräge Anordnung der Schauben führt zu einer Verbesserung der Ausziehtragfähigkeit.

Figur 39-42 zeigen vier vorteilhafte Ausführungsformen, die in Hinblick auf die vorangehenden Überlegungen zur Ausziehtragfähigkeit bevorzugt sind:
**Figur 39** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Querschnittsansicht, bei der ein Einführloch 30 senkrecht zu einer Anschlussfläche des Zapfens 3 orientiert ist und ein anderes Einführloch 30 schräg zu der Anschlussfläche 10 des Zapfens 3 orientiert ist.

**Figur 40** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Querschnittsansicht, bei der beide Einführlöcher 30 schräg zu der Anschlussfläche 10 des Zapfens 3 und parallel zueinander orientiert sind.

**Figur 41** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Querschnittsansicht, bei der beide Einführlöcher 30 schräg zu der Anschlussfläche 10 des Zapfens 3 und schräg zueinander orientiert sind. Auf der Seite der Anschlussfläche 10 weisen die Schrägbohrungen nach außen und voneinander weg.

**Figur 42** zeigt eine Anordnung mit Zapfen 3 und lösbarer Verbindung 15 für eine Wand-, Decken-, Fassaden- oder Dachelementverbindung gemäß einem exemplarischen Ausführungsbeispiel der Erfindung in einer Querschnittsansicht, bei der beide Einführlöcher 30 schräg zu der Anschlussfläche 10 des Zapfens 3 und schräg zueinander orientiert sind. Auf der Seite der Anschlussfläche 10 weisen die Schrägbohrungen nach innen und zueinander hin.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Anordnung für eine Wand-, Decken-, Fassaden- oder Dachelementverbindung zur Verbindung stab-, balken- oder plattenförmiger Holzbauteile (1, 2), aufweisend:
einen Zapfen (3) mit mindestens einem Einführloch (30); und
eine lösbare Verbindung (15), die lösbar durch das mindestens eine Einführloch (30) des Zapfens (3) hindurchführbar und in ein erstes Holzbauteil (1) einführbar ist;
wobei der Zapfen (3) ausgebildet ist, mittels der lösbaren Verbindung (15) an einer Anschlussfläche (10) an dem ersten Holzbauteil (1) befestigt zu werden;
wobei der Zapfen (3) mit einer sich von der Anschlussfläche (10) in Richtung einer gegenüberliegenden Stirnfläche (11) zum Anschluss an ein zweites Holzbauteil (2) erweiternden Außenkontur ausgebildet ist;
wobei der Zapfen (3) zur Einführung in einen Einführungsbereich (5) einer am zweiten Holzbauteil (2) angeordneten Tasche oder Nut (4) ausgebildet ist; und
wobei der Zapfen (3) zur Halterung in einem Haltebereich (6) der Tasche oder Nut (4) mit einer an die Außenkontur des Zapfens (3) angepassten, sich nach innen erweiternden Innenkontur ausgebildet ist.

2. Anordnung gemäß Anspruch 1, wobei an der Anschlussfläche (10) des Zapfens (3) mindestens zwei Erhebungen (12) zum formschlüssigen Eingriff in mindestens zwei entsprechende Vertiefungen (13) am ersten Holzbauteil (1) vorgesehen sind.

3. Anordnung gemäß Anspruch 2, aufweisend eines der folgenden Merkmale:
wobei die mindestens zwei Erhebungen (12) an der Anschlussfläche (10) gleich große Flächen aufweisen;
wobei die mindestens zwei Erhebungen (12) an der Anschlussfläche (10) unterschiedlich große Flächen aufweisen;
wobei die mindestens zwei Erhebungen (12) rund, insbesondere kreisförmig, sind;
wobei die mindestens zwei Erhebungen (12) langgestreckt sind, insbesondere langgestreckt rechteckig mit abgerundeten Ecken oder mit langgestrecktem zentralen rechteckigen Abschnitt und angeschlossenen halbkreisförmigen Endabschnitten.

4. Anordnung gemäß einem der Ansprüche 1 bis 3, des Weiteren mit zumindest einem der folgenden Merkmale:
wobei an der Anschlussfläche (10) des Zapfens (3) mindestens eine Erhebung (12) zum formschlüssigen Eingriff in mindestens eine entsprechende Vertiefung (13) am ersten Holzbauteil (1) vorgesehen ist;
wobei das mindestens eine Einführloch (30) in dem Zapfen (3) senkrecht zu der Anschlussfläche (10) und/oder senkrecht zu der Stirnfläche (11) verläuft;
wobei der Zapfen (3) in einer Querschnittsansicht trapezförmig ist;
wobei das mindestens eine Einführloch (30) des Zapfens (3) eine, insbesondere kegelstumpfförmige oder kreiszylindrische, Aufnahme (48) für einen Schraubenkopf aufweist;
wobei der Zapfen (3) in einer Draufsicht schildförmig ist;
wobei der Zapfen (3) an der Anschlussfläche (10) und/oder an der Stirnfläche (11) eine Reibungserhöhungsstruktur (62) aufweist;
wobei das mindestens eine Einführloch (30) mindestens ein senkkopfschraubenkomplementäres Einführloch (30') und mindestens ein zylinderstiftkomplementäres Einführloch (30") aufweist;
wobei in einer Draufsicht der Zapfen (3) einen rechteckigen Umriss hat;
wobei in einer Draufsicht der Zapfen (3) einen rechteckigen Zentralabschnitt (70) und zwei abgerundete, insbesondere halbkreisförmige, Endabschnitte (72) aufweist;
wobei in einer Seitenansicht der Zapfen (3) einen zumindest abschnittsweise konischen Umriss hat;
wobei in einer Seitenansicht der Zapfen (3) einen ersten konischen Abschnitt (74) und einen sich daran anschließenden und gegenüber diesem abknickenden zweiten konischen Abschnitt (77) hat.

5. Anordnung gemäß einem der Ansprüche 1 bis 4, wobei das mindestens eine Einführloch (30) in dem Zapfen (3) schräg zu der Anschlussfläche (10) und/oder schräg zu der Stirnfläche (11) verläuft, wobei ein Winkel (β) zwischen einer Verlaufsrichtung (32) des mindestens einen Einführlochs (30) in dem Zapfen (3) einerseits und einer Normalen (36) der Anschlussfläche (10) und/oder einer Normalen (34) der Stirnfläche (11) andererseits in einem Bereich von 15° bis 75°, insbesondere in einem Bereich von 30° bis 60°, liegt, wobei vorzugsweise eine Mehrzahl von Einführlöchern (30) in dem Zapfen (3) schräg zueinander und/oder schräg zu der Anschlussfläche (10) und/oder schräg zu der Stirnfläche (11) verlaufen, wobei sich weiter bevorzugt das mindestens eine Einführloch (30) schräg durch die mindestens eine Erhebung (12) hindurch erstreckt.

6. Anordnung gemäß einem der Ansprüche 1 bis 5, wobei der Zapfen (3) in einer Querschnittsansicht zueinander geneigte Seitenflächen (9) aufweist, die über Rundungen (38) in die Stirnfläche (11) übergehen.

7. Anordnung gemäß einem der Ansprüche 1 bis 6, wobei der Zapfen (3) in einer Querschnittsansicht zueinander geneigte und jeweils abknickende Seitenflächen (9) aufweist, die, insbesondere über eine Kante (40), in die Stirnfläche (11) übergehen.

8. Anordnung gemäß einem der Ansprüche 1 bis 7, wobei der Zapfen (3) in einer Querschnittsansicht zueinander geneigte und Stufen (44) aufweisende Seitenflächen (9) aufweist.

9. Anordnung gemäß einem der Ansprüche 1 bis 8, wobei der Zapfen (3) in einer Querschnittsansicht doppeltrapezförmig ist.

10. Anordnung gemäß einem der Ansprüche 1 bis 9, wobei der Zapfen (3) in einer Draufsicht dreieckig ist.

11. Anordnung gemäß einem der Ansprüche 1 bis 10, wobei der Zapfen (3) in einer Draufsicht einen dreieckigen Abschnitt (50) und einen sich daran anschließenden rechteckigen Abschnitt (52) aufweist.

12. Wand-, Decken-, Fassaden- oder Dachelementverbindung, aufweisend:
eine Anordnung gemäß einem der Ansprüche 1 bis 11;
ein erstes Holzbauteil (1), an dem die Anschlussfläche (10) des Zapfens (3) mittels der lösbaren Verbindung (15) befestigt oder befestigbar ist;
ein zweites Holzbauteil (2), an das der Zapfen (3) angeschlossen oder anschließbar ist, so dass das zweite Holzbauteil (2) der Stirnfläche (11) des Zapfens (3) zugewandt ist, wobei das zweite Holzbauteil (2) eine Tasche oder Nut (4) mit einem Einführungsbereich (5) zum Einführen des Zapfens (3) und einem Haltebereich (6) zum Haltern des Zapfens (3) aufweist, wobei der Haltebereich (6) mit einer an die Außenkontur des Zapfens (3) angepassten, sich nach innen erweiternden Innenkontur ausgebildet ist.

13. Wand-, Decken-, Fassaden- oder Dachelementverbindung gemäß Anspruch 12, des Weiteren mit zumindest einem der folgenden Merkmale:
wobei das erste Holzbauteil (1) mindestens zwei Vertiefungen (13) aufweist, in die mindestens zwei Erhebungen (12) an der Anschlussfläche (10) des Zapfens (3) formschlüssig eingreifen;
wobei die Tasche oder Nut (4) unmittelbar in dem zweiten Holzbauteil (2) gebildet ist, insbesondere ausschließlich durch eine Holzfläche des zweiten Holzbauteils (2) begrenzt ist;
wobei das erste Holzbauteil (1) und/oder das zweite Holzbauteil (2) an einem dem Zapfen (3) zugewandten Oberflächenabschnitt eine Reibungserhöhungsstruktur (62) aufweist;
wobei das zweite Holzbauteil (2) seitlich von der Tasche oder Nut (4) einen Verstärkungskragen (42) aufweist;
wobei das zweite Holzbauteil (2) in der Tasche oder Nut (4) eine Klebstoffstruktur (46) aufweist;
wobei die Tasche oder Nut (4) in einer Querschnittsansicht trapezförmig ist;
wobei die Tasche oder Nut (4) in einer Querschnittsansicht zueinander geneigte innere Seitenflächen (16) aufweist, die über Rundungen (38) in eine Bodenfläche (18) übergehen;
wobei die Tasche oder Nut (4) in einer Querschnittsansicht zueinander geneigte und jeweils abknickende innere Seitenflächen (16) aufweist, die, insbesondere über eine Kante (84), in eine Bodenfläche (18) übergehen.

14. Wand-, Decken-, Fassaden- oder Dachelementverbindung gemäß einem der Ansprüche 12 bis 13, wobei die Tasche oder Nut (4) in einer Querschnittsansicht zueinander geneigte und Stufen (44) aufweisende innere Seitenflächen (16) aufweist.

15. Wand-, Decken-, Fassaden- oder Dachelementverbindung gemäß einem der Ansprüche 12 bis 14, wobei die Tasche oder Nut (4) in einer Querschnittsansicht doppeltrapezförmig ist.
